# EUROPEAN PATENT SPECIFICATION

(11) **EP 2 321 074 B1**
(45) Date of publication and mention of the grant of the patent: **04.06.2014**
(21) Application number: 09784864.2
(22) Date of filing: 31.07.2009
(51) Int. Cl.: B21D 53/08

(54) **HEAT EXCHANGER CORE METHOD AND APPARATUS**
WÄRMETAUSCHERKERNVERFAHREN UND VORRICHTUNG
PROCÉDÉ ET APPAREIL POUR NOYAU D'ÉCHANGEUR DE CHALEUR

(30) Priority: 31.07.2008 GB 0814031
(43) Date of publication of application: 18.05.2011
(73) Proprietor: Emerson & Renwick Ltd, Accrington Lancashire BB5 4EF (GB)
(72) Inventor: WESTWELL, Ian, Lancashire BB5 4EF (GB); HARGREAVES, Colin, Lancashire BB5 4EF (GB); CLEMENTS, Benjamin, Lancashire BB5 4EF (GB)
(74) Representative: Cawley, Aimee Elizabeth
(86) International application number: PCT/GB2009/001916
(87) International publication number: WO 2010/013022

(56) References cited:
- EP-A2- 0 342 975
- GB-A- 2 423 038
- JP-A- 57 205 030

## Description

### FIELD OF INVENTION

The present invention relates to apparatus and methods for assembling the core of a heat exchanger. The invention extends to heat exchangers manufactured using the apparatus and/or method.

### BACKGROUND ART

Heat exchanger cores of the kind with which the present invention are concerned, consist of a plurality of tubes typically flattened tubes that are positioned parallel with, and coplanar to, one another, with the tubes being spaced apart by respective corrugated sheet metal elements, which are referred to as fin assemblies or fins.

Hence, the heat exchanger core consists of a matrix of alternatively spaced tubes and fins. A pre-determined number of tubes and fins in a matrix are then secured together by means of header plates or manifolds each having apertures therein for receiving opposite ends of the tubes to form a heat exchanger.

Machines are known for assembling heat exchanger cores, for example, the apparatus disclosed in EP 0342975 B 1. This known apparatus includes a tube storage/supply area where the heat exchanger tubes are produced and stored, a fin storage/supply area where the fins are produced and stored, and a matrix assembly area where the fins are integrated in between the tubes to produce the final core matrix.

Problems associated with the known apparatus are that the speed of producing heat exchanger cores is dictated by the synchronous assembly of the heat exchanger tubes with the fins. This is a difficult assembly arrangement to utilize effectively in an integrated heat exchanger production facility as the fin mill must be operated separately or at a significantly lower production rate, which is undesirable.

The apparatus disclosed in GB2423038, addresses the problems associated with EP 0342975 B1 by providing an apparatus for assembling a heat exchanger core matrix, the apparatus comprising:- (i) tube feed means for feeding heat exchanger tubes to a support surface; and (ii) fin feed means for feeding heat exchanger fins to the support surface; wherein, in use, the apparatus is operable to feed tubes to the support surface, and simultaneously insert fins between tubes on the support surface to thereby assemble a core matrix. This design overcomes problems associated with speed in relation to EP 0343975, but presents its own problems.

One problem associated with GB2423038, is the difficulty in using the apparatus described therein for the manufacture of large format heat exchangers in which the tubes and airways can exceed 1 metre in length. Typically the aluminium used to manufacture airways or fins for heat exchangers is of relatively thin gauge. Relatively short sections of fin or airway at the normal production speeds of this equipment are relatively easy to reliably insert between adjacent tubes. However, with larger format heat exchangers as the length of the fin or airway sections increases at the normal production speeds it is difficult to reliably locate these longer fins accurately into a suitable position between two adjacent tubes in the matrix. One reason is that the longer fins or airways have to travel a greater distance to achieve end engagement within the exchanger matrix as it is assembled. Given this problem conventional manufacturing equipment may have to be operated at non-optimum speeds to enable the effective engagement of longer fins or airways.

Also known in the prior art is JP 57 205030 A which discloses the preamble of claim 1.

There is a need therefore for an apparatus and method for the effective manufacture of large format tube and fin heat exchangers.

### DISCLOSURE OF THE INVENTION

The present invention and its specific embodiments aim to address the problems with the prior art, and to provide an improved apparatus and an effective method for assembling a large format heat exchanger core matrix. The invention is however equally applicable for the manufacture of small format heat exchanger core matrix.

According to a first aspect of the present invention, there is provided an apparatus for assembling a heat exchanger core matrix, the apparatus comprising:- (i) tube feed means for feeding heat exchanger tubes to a support surface; and (ii) fin feed means for feeding heat exchanger fins to the support surface; wherein the tube feed means and the fin feed means are located above the support surface and, in use, the apparatus is operable to sequentially and vertically feed the tubes and fins to the support surface via a feed guide, characterised in that the tubes and fins are fed by a common feed guide.

By the term "heat exchanger core matrix", we mean a plurality of tubes that are positioned substantially parallel with, and substantially coplanar to, one another, with the tubes being spaced apart by fins or airway. By the term "fin" or "fin element" or "airway", we mean a substantially corrugated sheet metal element, which is inserted between the tubes to form the core matrix.

Preferably, the heat exchanger core matrix comprises a predetermined number of tubes and fins. Preferably, the tubes and fins of the heat exchanger core matrix are configured so as to start with a fin (the front fin) and finish with a fin (the rear fin).

Preferably, the tube storage means is adapted to store a plurality of tubes therein, preferably in a substantially vertical stack. The cross-section of the tubes may be substantially flattened, i.e. a generally elongate elliptical shape as opposed to the usual circular or plain elliptical shape. Hence, preferably, the tube storage means is adapted to store a plurality of tubes in a substantially vertical stack, wherein the stack is arranged in use to retain relatively flattened tubes in a substantially horizontal orientation.

Preferably, the tube feed means is operable to feed tubes from said tube storage means to the common feed guide. Preferably the feed means is operable to feed tubes through the common feed guide and onto the support surface. Preferably the tube feed means is operable to feed tubes from said tube storage means to the common feed guide in a continuous process. Preferably the feed means is operable to feed tubes through the common feed guide and onto a collating surface prior to transfer to the support surface. The support surface is the region of the apparatus where the heat exchanger core matrix is assembled and may also be referred to as an assembly surface.

Preferably the tube feed means comprises a conveyor means for transportation of the tubes to and through the common fee guide. Preferably the conveyor is fed with tubes from a stack bar assembly. The stack bar assembly may comprise a plurality of tubes or a single tube and may for example comprise a twin tube stack bar assembly.

Preferably the tube conveyor means comprises one or more indexed belts having flights at regular intervals for holding tubes in the desired orientation for passage through the common feed guide and for presentation to the support surface or when the present the collating surface at the required interval. In a preferred embodiment the conveyor means comprises one or more belts with two laterally spaced belt rollers, at least one of which is a driven roller, which enable the conveyor to deliver the tubes in-line with the direction of assembly of the heat exchanger. In a preferred embodiment the conveyor means in addition comprises a guide roller working in combination with the belt rollers to guide the conveyor belt through the common guide. Preferably the guide roller is located forward of the rotational axis of the belt roller proximate to the common guide.

Preferably, in use, the tube in the tube storage means rests upon an upper edge of the conveyor belt so that, as the belt rotates, the flights move past tubes in the tube storage means, and thereby receives a tube.

Preferably, the apparatus comprises a collating means with collating surface operable to move at least one tube of fin along the support surface, and preferably the heat exchanger core matrix as it is assembled along the support surface. It is especially preferred that the collating means is a matrix collator beam mechanism adapted to receive on its collating surface a tube and fin/airway pairing deposited through the common guide means and after transfer of this pairing from the collating surface to the support surface to then contact with the tube of the pairing deposited onto the support surface in order to move the tube and fin/airway pairing past the common guide means. The collating means may be supported in a position above the support surface by fixing means.

In a preferred embodiment the tube feed means with reference to the direction of heat exchanger core matrix manufacture is positioned inline and upstream of the common guide means. Preferably the tubes are transferred from the tube storage means to the common feed guide along the line of manufacture.

In a preferred embodiment the fin/airway feed means for feeding heat exchanger fins to the collating and ultimately the support surface is positioned inline and downstream of the common guide means. Preferably fins are presented to the common feed guide by means for transferring the fins from a fin storage or manufacturing means in the opposite direction to the direction of tube transfer to the common feed guide.

In a preferred embodiment the fin feed means comprises an inline fin conveyor means adapted to secure the fins in the required orientation for presentation to the common feed guide and the required interval. In a preferred embodiment the inline fin conveyor means comprises an indexed belt and two laterally spaced belt rollers, at least one of which is a driven roller, which enable the fin conveyor to deliver the fins in-line in the opposing direction to the direction of assembly of the heat exchanger core matrix to the common guide means in the required orientation and at the required interval. In a preferred embodiment the indexed fin conveyor means works in cooperation with a platform delivery mechanism to deliver the required fins from the indexed conveyor means to the common feed guide. In a preferred embodiment this platform delivery mechanism works in cooperation with a pusher beam mechanism for transferring fins from the platform surface and into the common guide means. In a preferred embodiment the indexed fin conveyor means transfers the fins towards the common guide means with the fins in contact with a fin support surface. In a preferred embodiment the platform delivery mechanism is located such that its top surface is co-planar with the top surface of the fin support surface. The top surface of the platform delivery mechanism may be moved from this position to a level below the fin support surface proximate to the common feed guide. At this location the pusher beam mechanism may transfer fins located on the top surface of the lowered platform from the platform surface and into the common guide means.

In a preferred embodiment the indexed fin conveyor means is supplied with fins from a fin-manufacturing unit via a fin conveyor system, which presents the fins to the indexed fin conveyor means perpendicular- to the direction of movement of the indexed fin conveyor means.

The fin conveyor system may comprise a plurality of flights, whereby each flight is configured to interface into a fin convolution so as to provide a retaining effect on a fin and thereby minimize the skidding of a fin along the fin conveyor system.

The speed of the fin conveyor system may be synchronized with respect to the feed and cut rate of the fin manufacturing unit This is preferably achieved by providing drive control means to control the speed of the fin conveyor system relative to the fin manufacturing unit.

The apparatus may additionally of alternatively comprise drive control means to apply a cam profile to the fin conveyor system and/or fin manufacturing unit.

The indexed fin conveyor means may comprise a continuous series of indexed regions or may comprise a series of separated regions of indexation enabling two or more fins to be supplied to the platform at a given point in the manufacturing cycle. This enables batches of fins to be removed from the indexed fin conveyor means for sequential transfer to the common feed guide via operation of the fin pusher beam. In this fashion the indexed fin conveyor means in cooperation with the other associated components is acting as a fin transfer buffer. The mechanism is able to take the continuous or semi-continuous feed of fins from a fin mill and to transpose this into a regulated and stepped delivery of fins to the heat exchanger core matrix as it is assembled. This combination maximizes the efficiency of the fin mill whilst ensuing that large format heat exchangers may be manufactured at reasonable production speeds. The effective size of the fin transfer buffer depends on the length of the indexed fin conveyor; the longer the conveyor the larger the buffer. The length of the indexed fin conveyor may be selected along with the regularity of indexed regions on the conveyor to provide the optimum throughput of the heat exchanger manufacturing apparatus. In a preferred embodiment the indexed fin conveyor means comprises a series of separated regions of indexation enabling two to six fins to be supplied to the platform at a given point in the manufacturing cycle.

In a more preferred embodiment the indexed fin conveyor means comprises a series of separated regions of indexation enabling four to be supplied to the platform. In a preferred embodiment the fins are fed in batches of four to the indexed fin conveyor means and each batch is rapidly moved to the platform enabling a further batch of four fins to be loaded laterally onto the indexed fin conveyor means. In a preferred embodiment the fins are supplied to the indexed fin conveyor means in an orientation, which is 90 degrees to their orientation on the support surface. During transfer from the platform to the support surface preferably via the collating surface the fins are effectively rotated through 90 degrees as they transfer through the common guide. The common guide is therefore arranged to provide means for this re-orientation, preferably in a curved surface, which substantially aligns with the platform surface at its upper end and is approximately at 90 degrees to platform surface at its lower end proximate to the collating surface.

In a preferred embodiment heat exchanger matrix retainer bars are located forward of the common guide means and above the support surface. These bars assist in retaining the components of the heat exchanger matrix in position as it is assembled and moved along the support surface by the collator beam. In a preferred embodiment the retainer bars may be replaced by or incorporate a brush surface. This brush surface is effective in grabbing the components of the core as it is assembled and effectively preventing these components from falling over during assembly of the core.

The apparatus may be operable to sequentially insert a tube and fin into a developing heat exchanger matrix. In a preferred embodiment it is operable to sequentially insert a tube and fin pair into a developing heat exchanger matrix.

Preferably, the fin feed means comprises a fin mill, in which fins may be prepared.

According to a second aspect of the present invention, there is provided a method of assembling a heat exchanger core matrix, the method comprising the steps of:- (i) feeding a tube vertically to a collating surface through a feed guide; (ii) feeding a fin vertically to the collating surface through a feed guide to sequentially locate the fin on the collating surface downstream of the tube; (iii) transferring the tube and fin pairing from the collating surface to a support surface; (iv) moving the tube and fin pairing along the support surface and (v) repeating steps (i) to (iv) to assemble a predetermined number of tube and fin pairings on the support surface, characterised in that the tube and the fin are fed through a common feed guide.

The method may further include the steps of:- (vi) having assembled a predetermined number of tube and fin pairings on the support surface, feeding a fin vertically to the collating surface through the feed guide; (vii) transferring the fin from the collating surface to the support surface; and (viii) moving the fin along the support surface to contact with the tube last located on the support surface.

Preferably, the method is carried out using apparatus in accordance with the first aspect.

The heat exchanger core matrix may be used to prepare a heat exchanger for use in an automobile or domestic/commercial air conditioning units. The heat exchanger may be used as a radiator, a heater, a condenser, and evaporator, or an oil cooler.

### DESCRIPTION OF THE DRAWINGS

For a better understanding of the invention, and to show how the same may be carried into effect, reference will now be made, by way of example, to various specific embodiments of the invention as shown in the accompanying diagrammatic drawings, in which:
Figure 1 illustrates a side plan schematic view of a first embodiment of an apparatus according to the invention used for the manufacture of a core matrix of tubes and fins, for example, for use as a heat exchanger;
Figures 2-1 to 2-12 illustrate a side plan schematic view of the apparatus according to the invention as depicted in Figure 1 at various stages in the heat exchanger assembly process;
Figure 3 illustrates a side plan schematic view of a second embodiment of an apparatus according to the invention used for the manufacture of a core matrix of tubes and fins, for example for use as a heat exchanger;
Figures 4-1 to 4-17 illustrate a side plan schematic view of the apparatus according to the invention as depicted in Figure 3 at various stages in the heat exchanger assembly process;
Figure 5a illustrates a schematic plan view of an embodiment of a fin conveyor system according to the invention arranged in association with a fin manufacturing unit;
Figure 5b illustrates a schematic overview of the fin conveyor system as depicted in Figure 5a arranged in association with a fin manufacturing unit;
Figure 5c illustrates a schematic plan view of a belt of the fin conveyor system as depicted in Figure 5a;
Figure 5d illustrates a schematic side view of the belt of the fin conveyor system as depicted in Figure 5a;
Figure 5e illustrates a schematic side view of region A of the belt of the fin conveyor system as depicted in Figure 5d.

### DETAILED DESCRIPTION OF THE INVENTION

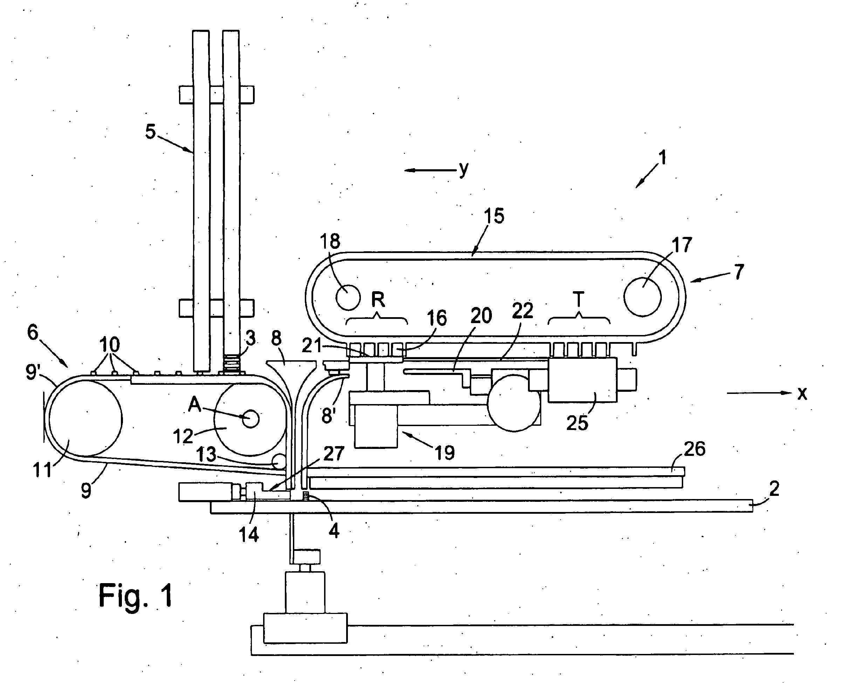

Referring to Figure 1, there is shown a first embodiment of an apparatus 1 used for the manufacture of a heat exchanger core matrix (not shown).

Referring to Figure 1, the apparatus 1 consists of a horizontal support table 2 on to which flattened heat exchanger tubes 3 and heat exchanger fins 4 are placed and supported during manufacture. The tubes 3 are stacked in a twin tube stack bar assembly 5; however, this may be replaced by a single stack bar assembly. A tube feed means 6 for feeding heat exchanger tubes 3 to the support surface 2 and a fin feed means 7 for feeding the heat exchanger fins 4 to the support surface 2 are located above the support surface 2.

In use, the apparatus 1 is operable to sequentially mount the tubes 3 and fins 4 on the support surface 2, whereby each of the tubes and fins is arranged in an at least substantially upright (vertical) orientation. This is achieved by sequentially and vertically feeling the tubes and fins to the support surface 2 via a common feed guide 8 and a collating surface 27 that is located on a collating unit 14.

The tube feed means 6 is operable to feed a tube 3 from the tube storage means 5, to and through the common feed guide 8 and ultimately onto the support surface 2 via the collating surface 27. Likewise, the fin feed means 7 is operable to feed a fin 4 from a fin manufacturing unit, to and through the common feed guide 8 and ultimately onto the support surface 2 via the collating surface 27.

The tube feed means 6 comprises a tube conveyor means 9 for transportation of the tubes 3 to and through the common feed guide 8. The tube conveyor means 9 comprises an indexed belt 9'(or alternatively a parallel series of indexed belts) having flights 10 at regularly spaced intervals for holding tubes 3 in the desired orientation for passage through the common feed guide 8 and for presentation to the collating surface 27 and ultimately the support surface 2 at the required interval. The indexed belt 9' is in contact with two laterally spaced belt rollers 11, 12, with belt roller 12 being a driven roller, which enables the tube conveyor means 9 to deliver the tubes 3 in-line with the direction of assembly of the heat exchanger shown as X. The indexed belt 9' is also in contact with a guide roller 13 which works in combination with the belt rollers 11,12 to guide the tube conveyor means 9 through the common feed guide 8. The guide roller 13 is located forward of the rotational axis A of the belt roller 12 proximate to the common feed guide 8.

The tube storage stack 5 rests upon an upper edge of the conveyor means 9 so that, as the indexed belt 9' rotates, the flights 10 move past the tubes 3 in the stack 5 and it thereby receives a tube 3. As the indexed belt 9' continues to move towards the common feed guide 8 it carries the tube 3 into the guide 8 and the orientation of the tube 3 is changed by the path of the conveyor means 9 and the feed guide 8 so that the tube 3 is orientated from a substantially horizontal to a substantially vertical position as it exits the guide 8 and comes into contact with the collating surface 27 and then ultimately the support surface 2. Hence, the tube is arranged in an at least substantially upright (vertical) orientation on the support surface 2.

As can be seen from Figure 1 the tube feed means 6 is positioned inline and is upstream of the common guide means 8.

In contrast the fin feeding means 7 is positioned inline but downstream of the common guide means 8. The fin feeding means 7 consists of an inline fin conveyor means 15 adapted to secure the fins 4 in the required orientation and at the required interval for presentation to the common feed guide 8. The fin conveyor means 15 comprises an indexed belt 16 cooperating with two laterally spaced belt rollers 17 and 18, of which belt roller 18 is a driven roller. The fins 4 are delivered in-line in the opposing direction Y to the direction X of assembly of the heat exchanger core matrix and delivery of the tubes 3 to the common feed guide 8.

The indexed belt 16 works in cooperation with a platform delivery mechanism 19 to deliver the required fins 4 from the fin conveyor means 15 to the common feed guide 8. The platform delivery mechanism 19 works in cooperation with a pusher beam mechanism 20 for transferring fins 4 from a platform surface 21 and into the common guide means 8. The fin conveyor means 15 transfers the fins 4 towards the common guide means 8 in the direction Y with the fins 4 in contact with a fin support surface 22. In Figure 1, the platform delivery mechanism 19 is located such that its top surface 21 is coplanar with the top surface of the fin support surface 22. The top surface 21 of the platform delivery mechanism 19 may be moved from this position shown to a level below the fin support surface 22 proximate to a region of the common feed guide at 8'. At this location the pusher beam mechanism 20 may transfer fins 4 located on the top surface 21 of the lowered platform from the platform surface 21 and into the common guide means 8.

The indexed belt 16 is supplied with fins 4 from a fin-manufacturing unit via a fin conveyor system 25, which presents the fins 4 to the indexed belt 16 perpendicular to the direction Y of movement of the fin conveyor means 15.

The indexed belt 16 has a series of separated regions of indexation. In the embodiment depicted in Figure 1, the indexed belt 16 has two regions of indexation R, T, enabling four fins 4 to be supplied to the platform surface 21 at a given point in the manufacturing cycle. This enables batches of fins 4 to be removed from the fin conveyor means 15 for sequential transfer to the common feed guide 8 via operation of the pusher beam mechanism 20.

The fin is orientated in a substantially horizontal position as it is transferred to the common feed guide 8. However, as with the tube 3, the orientation of the fin 4 is changed by the path of the common feed guide 8 so that the fin 4 is orientated from a horizontal to a vertical position as it exits the guide 8 and comes into contact with the collating surface 27 and then ultimately the support surface 2. Hence, the fin 4 is arranged in an at least substantially upright (vertical) orientation on the support surface 2.

The tube conveyor means 9 and the fin conveyor means 15 are controllable and/or arranged such that they can deliver a tube 3 and a fin 4 to the collating surface 27 to form a collated tube/fin pairing 3,4 at that surface. The tube 3 and fin 4 of the pairing are arranged sequentially and at least substantially vertically at the collating surfaces 27, whereby the fin 4 of the tube/fin pairing is positioned downstream from the tube 3. Preferably, the tube conveyor means 9 and the fin conveyor means 15 deliver a tube 3 and a fin 4 at least substantially simultaneously to the collating surface 27 to form a collated tube/fin pairing.

In the embodiment depicted in Figure 1, the collating surface 27 is located at an upper surface region of the collating unit 14. The collating unit 14 is operable to transfer the tube/fin pairing 3,4 from the collating surface 27 to the support surface 2. When the tube/fin pairing is transferred onto the support surface 2, the tube and fin remain sequentially arranged and at least substantially upright.

The collating unit 14 is also operable to move the tube/fin pairing 3,4 along the support surface 2 in direction X. As the heat exchanger core matrix is assembled on the support surface 2 the collating unit 14 moves the most recently deposited tube/fin pair past the common feed guide 8 into contact, if present, with the developing core matrix. The collating unit 14 may optionally then move the whole of the developing core matrix further along the support surface 2. In the embodiment depicted in Figure 1, the collating unit 14 is a matrix collator beam mechanism adapted to contact with a tube 3 deposited through the common guide means 8 onto the support surface 2 in order to move the tube/fin pairing 3,4 past the common guide means 8 and, if present, into contact with a previously deposited-pairing and/or part of the developing core matrix.

Also shown are heat exchanger matrix retainer bars 26 located forward of the common guide means 8 and above the support surface 2. These bars 26 assist in retaining the components of the heat exchanger core matrix in position (e.g. in an at least substantially upright orientation) as it is assembled and moved along the support surface 2 by the collating unit 14.

The apparatus 1 further comprises control means that is operable to count the number of pairing transfer cycles (not shown) and bring a transfer unit 40 into operation when the required number of core matrix components (tubes 3 and fins 4) are in-situ on the support surface 2. The transfer unit 40 comprises a contact member 41 and a transfer bed 42.

When sufficient core matrix components are arranged on the support surface 2 to form a complete (fully assembled) core matrix (x), the contact member 41 is operable to contact with the upstream end 43 of the core matrix so as to move it along the transfer bed 42. In so doing, the completed core matrix (x) may be transferred to a further manufacturing stage.

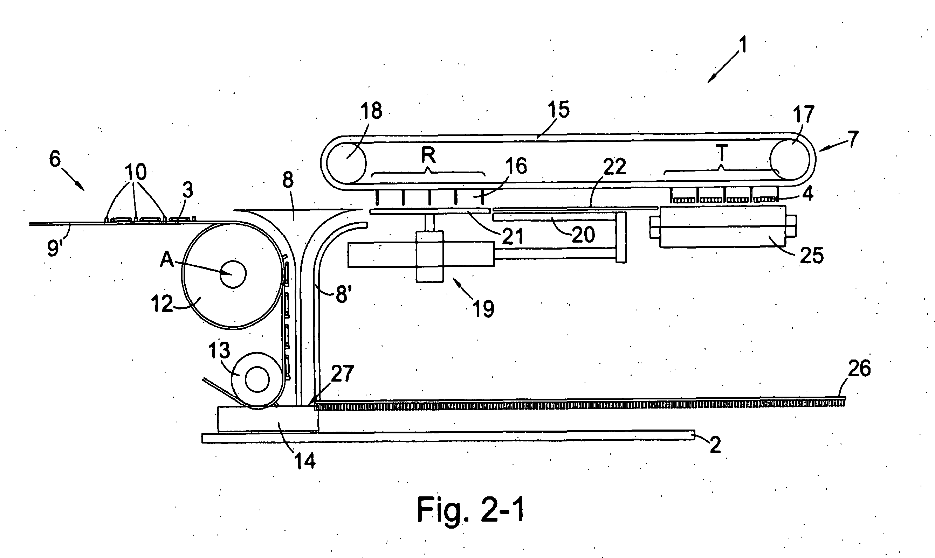

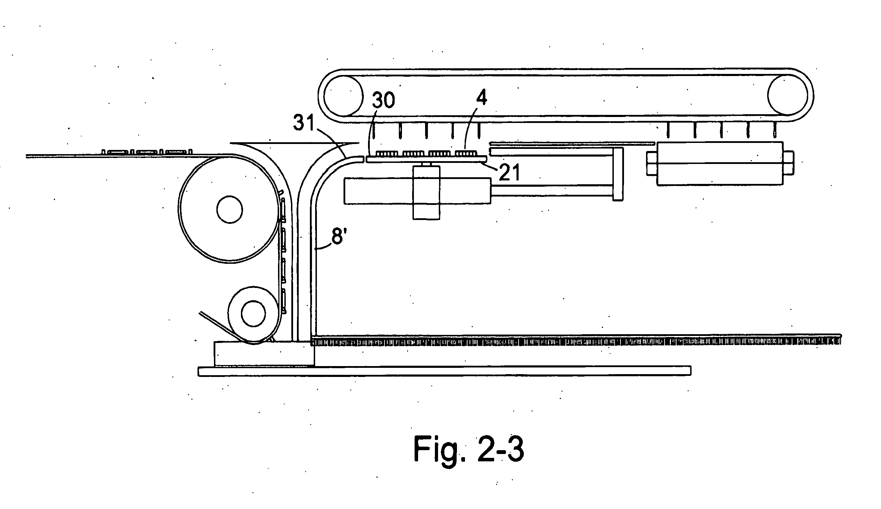

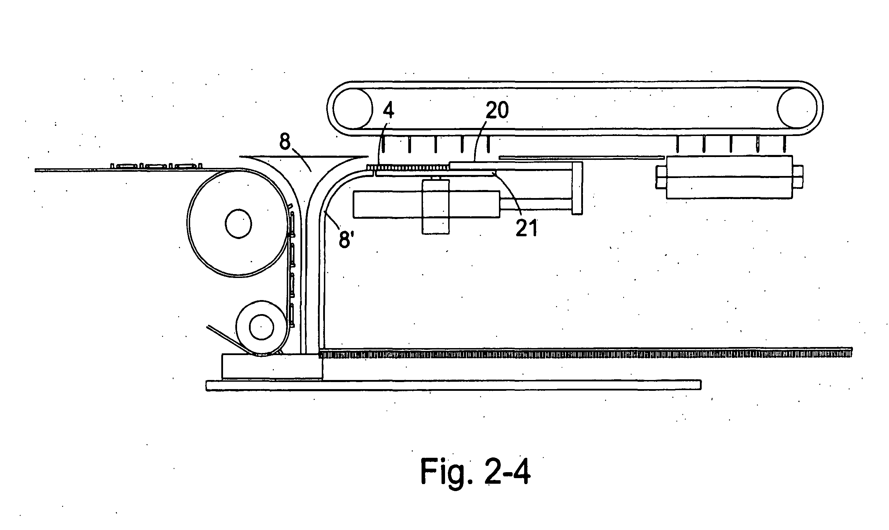

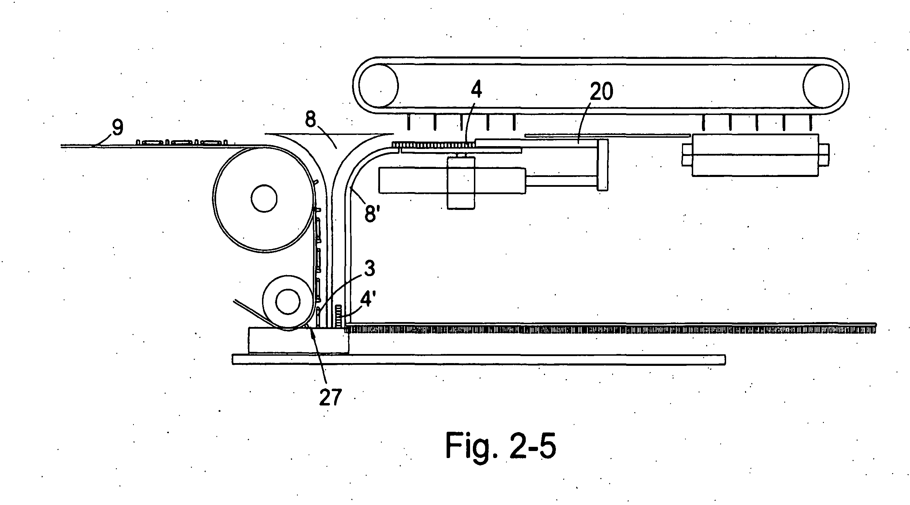

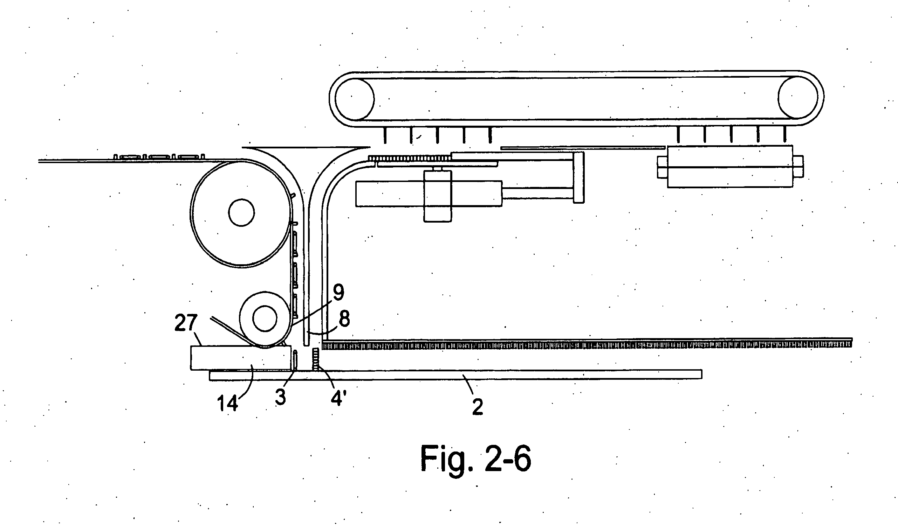

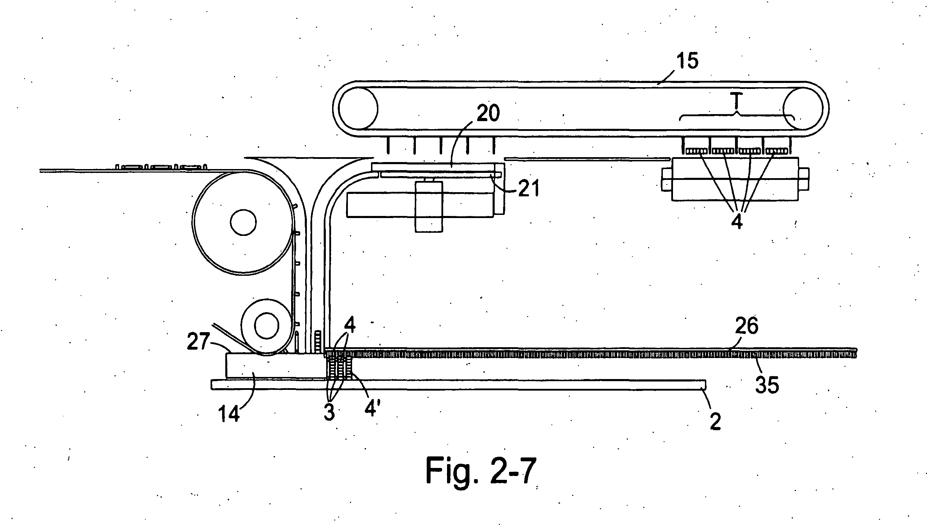

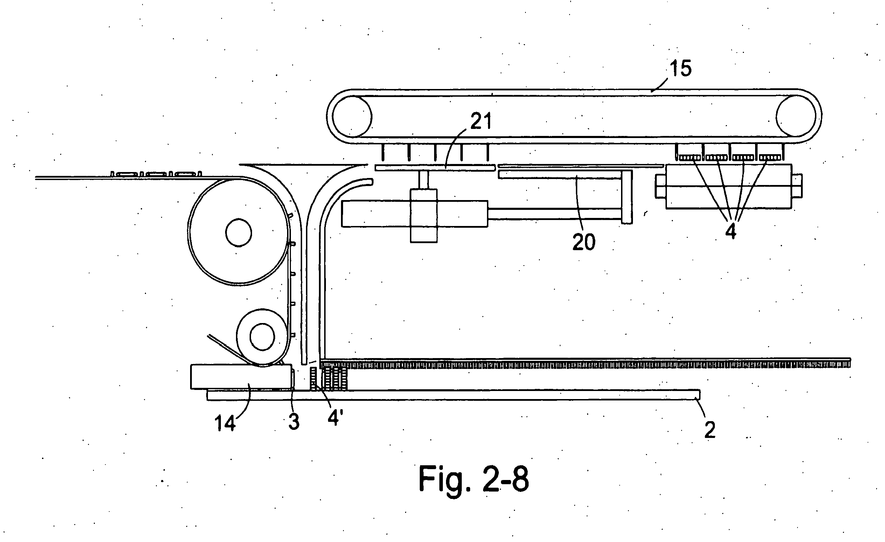

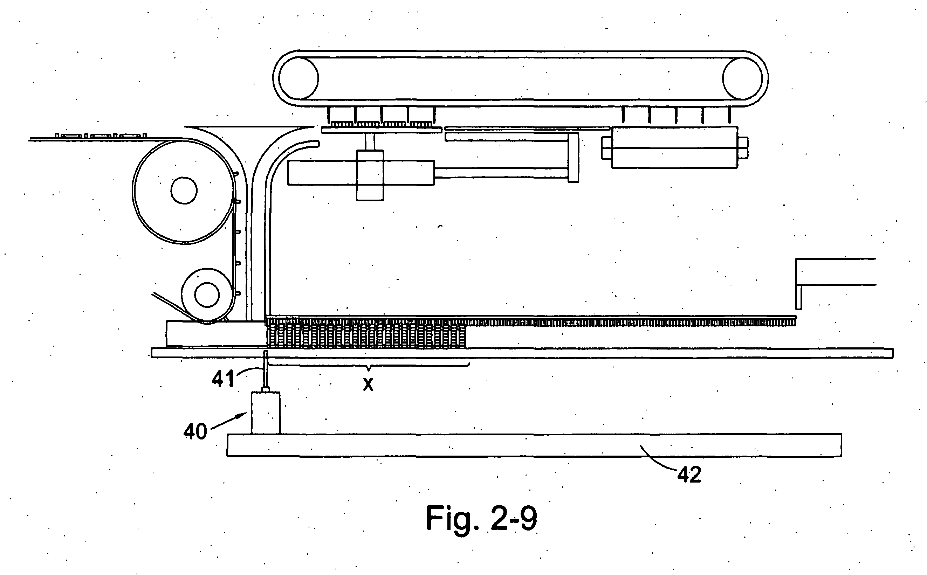

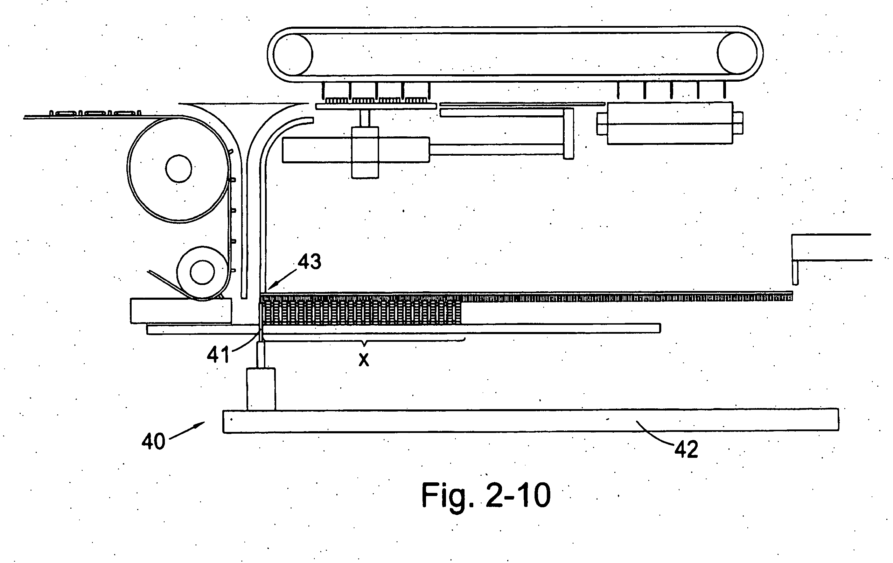

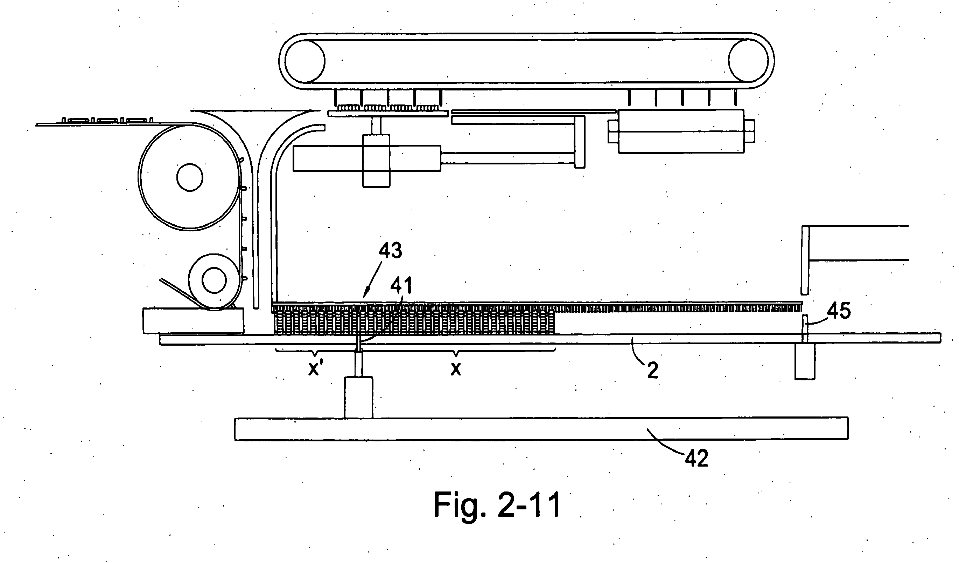

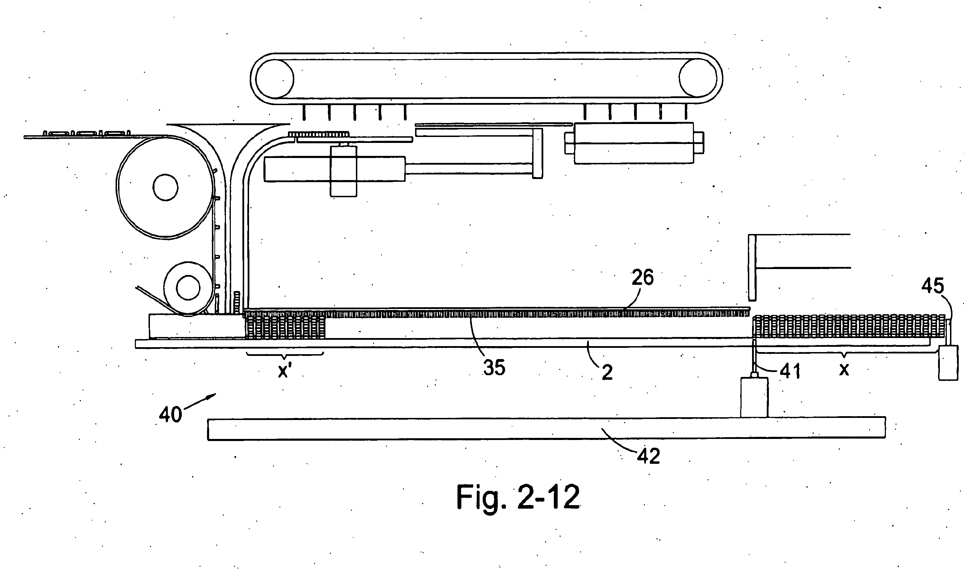

The operation of the apparatus 1 is further illustrated with reference to Figures 2-1 to 2-12.

Figure 2-1 shows the apparatus 1 at the start of the assembly cycle. The support surface 2 is clear of core matrix components. The tube conveyor means 9 is full of tubes 3 some of which are in the correct (at least substantially vertical) orientation for depositing onto the collating surface 27. The first buffer section T of the inline fin conveyor means 15 has been filed with four fins, which are ready for transfer to the platform surface 21, which is in turn in the raised position. The collating unit 14 is in the forward position with its collating surface 27 positioned underneath the common guide 8.

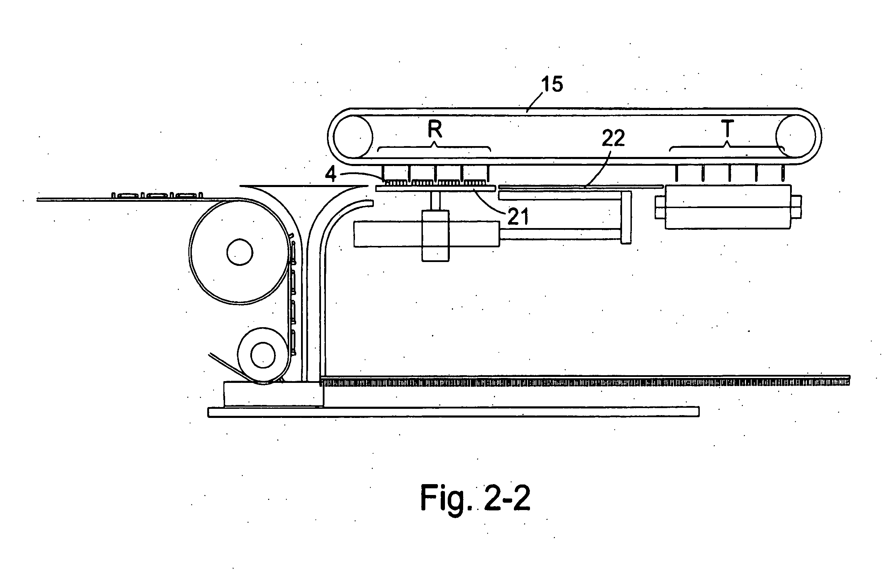

With preference to Figure 2-2, the fin conveyor means 15 has moved the four fins 4 from section T to a new second location R. The fourfins 4 have been transferred across the fin support surface 22 and onto the platform surface 21.

With reference to Figure 2-3, the platform surface 21 (supporting the four fins 4) has been lowered such that a front edge 30 of the surface is in alignment with a surface 31 of the common feed guide region 8'.

With reference to Figure 2-4, the pusher beam mechanism 20 is moved from its retracted position to make contact with the fins 4 on the platform surface 21 and it continues to move the four fins 4 towards the common feed guide 8, so that they become bunched.

With reference to Figure 2-5, the pusher beam mechanism 20 continues to act upon the bunched four fins 4 and it forces the front fin 4' to pass into the common feed guide 8. As the front fin 4' passes into the common feed guide 8 it falls towards the collating surface 27 under the action of gravity and is rotated through 90 degrees. Simultaneously, on the opposite side of the common feed guide 8, the tube conveyor means 9 moves a tube 3 (which has passed through the common feed guide 8) into contact with the collating surface 27. At this stage a tube/fin pairing 3,4' has collated on the collating surface 27. Although separated by the common feed guide 8, both the tube 3 and fin 4' are arranged sequentially and in an at least substantially vertical orientation on the collating surface 27. The fin 4' of the pairing is positioned downstream from the tube 3.

With reference to Figure 2-6, the collating unit 14 has been moved to the retracted position and the tube/fin pairing 3,4' (that were previously located on the collating surface 27) are now sequentially arranged and at least substantially vertically orientated on the support surface 2. When previously located on the collating surface 27, the tube/fin 3,4' pairing were prevented from moving with the collating unit 14 (as it moved to the retracted position) due to the resistance provided by the tube conveyor means 9 with respect to the tube 3 and the common feed guide 8 with reference to the fin 4'. Thus, as the collating unit 14 was withdrawn from underneath the tube/fin pairing 3,4' and the common feed guide 8, the tube/fin pairing 3,4' fell under the action of gravity onto the support surface 2.

Although not depicted, the collating unit 14 will subsequently move to a forward position so as to push the tube/fin pairing 3,4' along support surface 2. The transfer cycle of sequentially and vertically feeding tubes 3 and fins 4 (as explained above and depicted with reference to Figures 2-1 to Figure 2-6) is repeated so as to deposit multiple tube/fin pairings 3,4 on the support surface 2 and thereby develop a heat exchanger core matrix.

Figure 2-7 shows the position after a further two tube/fin pairings have been deposited onto the support surface 2. The collating unit 14 has been moved back into the forward position and, in so doing, it has made contact with the last tube/fin pairing that was transferred from the collating surface 27 and moved that pairing from beneath the common feed guide 8 and into contact with previously deposited tube/fin pairings. In this way the core matrix (x) is assembled on the support surface 2 and is held together in part by the action of a brush surface 35 associated with matrix retainer bars 26. The pusher beam mechanism 20 is in the fully extended position and the first buffer section T of the fin conveyor means 15 has been filed with a further four fins 4. The platform surface 21 is in the lowered position. The last tube/fin pairing of the initial four pairing transfer cycle is located on the collating surface 27 waiting to be transferred to the support surface 2.

With reference to Figure 2-8, the last pairing 3,4 has been transferred to support surface 2, the collating unit 14 is in the retracted position in contact with the last tube 3 of the cycle, the pusher beam mechanism 20 is now fully retracted and the platform surface 21 has been raised ready to receive the next batch of fins 4 from the fin conveyor means 15.

With reference to Figure 2-9, the pairing transfer cycle has been repeated a number of times to assemble the completed core matrix (x) on the support surface 2. The control means has counted the number of pairing transfer cycles and, now that the required number of core matrix components are in-situ on the support table 2, it brings a transfer unit 40 into operation. The transfer unit 40 comprises a contact member 41, which is shown in the retracted position, and a transfer bed 42.

With reference to Figure 2-10, the contact member 41 has been raised to make contact with the upstream end 43 of the completed core matrix (x). With reference to Figure 2-11, the contact member 41 in contact with the upstream end 43 of the completed core matrix (x) is moved along the transfer bed 42 and, in so doing, it transfers the completed core matrix (x) along the support surface 2 as a further core matrix (x') is being assembled behind the contact member 41. Also illustrated in Figure 2-11 is the movable stop member 45 associated with the support surface 2.

With reference to Figure 2-12, the contact member 41 has moved along the transfer bed 42 and transferred the core matrix (x) to the end of the support surface and into contact with the movable stop member 45. The core matrix is now free of the retainer bars 26 and associated brush surfaces 35 and it is retained in position by the movable stop member 45. The core matrix (x) is now ready to be moved to further stages of the heat exchanger assembly process. The contact member 41 is now retracted and the transfer unit 40 may now return to its starting position.

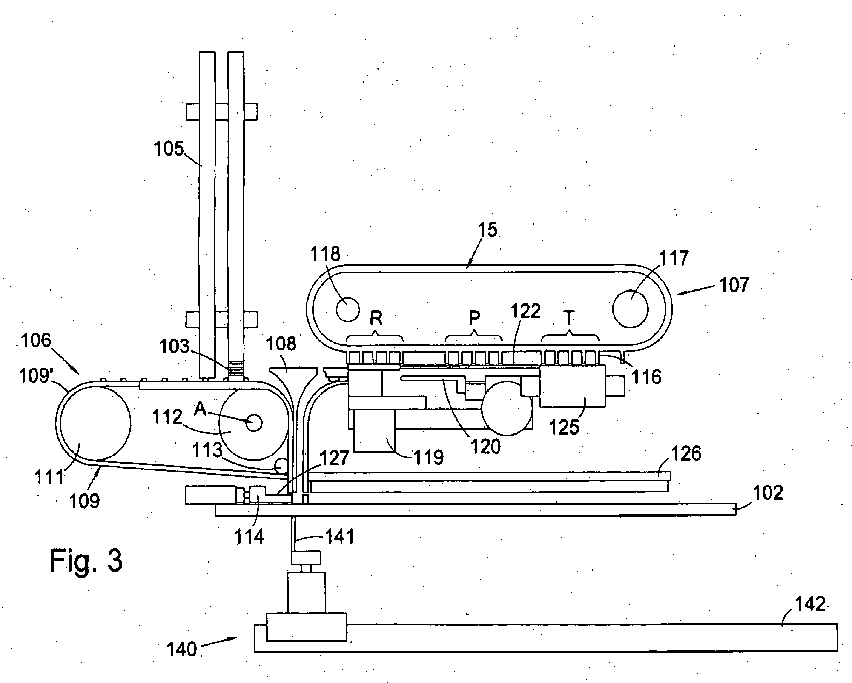

Referring to Figure 3, there is shown a second embodiment of an apparatus 100 used for the manufacture of a heat exchanger core matrix (not shown).

Referring to Figure 3, the apparatus 100 consists of a horizontal support table 102 on to which flattened heat exchanger tubes 103 and heat exchanger fins 104 are placed and supported during manufacture. The tubes 103 are stacked in a twin tube stack bar assembly 105. However, this may be alternatively replaced by a single stack bar assembly. A tube feed means 106 for feeding heat exchanger tubes to the support surface 102 and a fin feed means 107 for feeding heat exchanger fins 104 to the support surface 102 are located above the support surface 102.

In use, the apparatus 100 is operable to sequentially mount the tubes 103 and fins 104 on the support surface 102, whereby each of the tubes and fins is arranged in an at least substantially upright (vertical) orientation. This is achieved by sequentially and vertically feeding the tubes and fins to the support surface 102 via a common feed guide 108 and a collating surface 127 that is located on a collating unit 114.

The tube feed means 106 is operable to feed a tube 103 from the tube storage means 105, to and through the common feed guide 108 and ultimately onto the support surface 102 via the collating surface 127. Likewise, the fin feed means 107 is operable to feed a fin 104 from a fin manufacturing unit, to and through the common feed guide 108 and ultimately onto the support surface 102 via the collating surface 127.

The tube feed means 106 comprises a tube conveyor means 109 for transportation of the tubes 103 to and through the common fee guide 108. The tube conveyor means 109 comprises an indexed belt 109' (or alternatively a parallel series of indexed belts) having flights 110 at regularly spaced intervals for holding tubes 103 in the desired orientation for passage through the common feed guide 108 and for presentation to the collating surface 127 and ultimately the support surface 102 at the required interval. The indexed belt 109' is arranged in contact with two laterally spaced belt rollers 111,112, with belt roller 112 being a driven roller, which enables the tube conveyor means 109 to deliver the tubes 103 in-line with the direction of assembly of the heat exchanger shown as X. The indexed belt 109' is also arranged in contact with a guide roller 113 which works in combination with the belt rollers 111,112 to guide the tube conveyor means 109 through the common feed guide 108. The guide roller 113 is located forward of the rotational axis A of the belt roller 112 proximate to the common feed guide 108.

The tube storage stack 105 rests upon an upper edge of the tube conveyor means 109 so that, as the indexed belt 109' rotates, the flights 110 move past tubes 103 in the stack 105 and it thereby receives a tube 103. As the belt 109' continues to move towards the common feed guide 108 it carries the tube 103 into the guide 108 and the orientation of the tube 103 is changed by the path of the conveyor means 109 and the common feed guide 108 so that the tube 103 is orientated from a substantially horizontal to a substantially vertical position as it exits the guide 108 and comes into contact with the collating surface 127, and then ultimately the support surface 102. Hence, the tube 103 is arranged in an at least substantially vertical orientation on the support surface 102.

As can be seen from Figure 3, the tube feed means 106 is positioned inline and is upstream of the common guide means 108.

In contrast, the fin feeding means 107 is positioned inline but downstream of the common guide means 108. The fin feeding means 107 consists of an inline fin conveyor means 115 adapted to secure the fins 104 in the required orientation and at the required interval for presentation to the common feed guide 108. The fin conveyor means 115 comprises an indexed belt 116 cooperating with two laterally spaced belt rollers 117 and 118, of which belt roller 118 is a driven roller. The fins 104 are delivered in-line in the opposing direction Y to the direction X of assembly of the heat exchanger core matrix and delivery of the tubes 103 to the common feed guide 108.

The indexed belt 116 works in cooperation with a platform delivery mechanism 119 to deliver the required fins 104 from the fin conveyor means 115 to the common feed guide 108. The platform delivery mechanism 119 works in cooperation with a pusher beam mechanism 120 for transferring fins 104 from the platform surface 121 and into the common guide means 108. The fin conveyor means 115 transfers the fins 104 towards the common guide means 108 in the direction Y with the fins 104 in contact with a fin support surface 122. In Figure 3, the platform delivery mechanism 119 is located such that its top surface 121 is co-planar with the top surface of the fin support surface 122. The top surface 121 of the platform delivery mechanism 119 may be moved from this position shown to a level below the fin support surface 122 proximate to the region of the common feed guide at 108'. At this location the pusher beam mechanism 120 may transfer the fins 104 (located on the lowered platform surface 121) from the platform surface 121 and into the common guide means 108.

The indexed belt 116 is supplied with fins 104 from a fin-manufacturing unit via a fin conveyor system 125, which presents the fins 104 to the indexed belt 116 perpendicular to the direction Y of movement of the fin conveyor means 115.

The indexed belt 116 has a series of separated regions of indexation. In the embodiment depicted in Figure 3, the indexed belt 116 has three regions of indexation R, P, T, enabling four fins 104 to be supplied to the platform surface 121 at a given point in the manufacturing cycle. This enables batches of fins 104 to be removed from the fin conveyor means 115 for sequential transfer to the common feed guide 108 via operation of the fin pusher beam 120.

Intermediate indexation region P is provided to transfer four fins 400 from region T to region R. As a result, the transfer cycle time for transferring fins from region T to R is reduced and so the overall efficiency of the fin feed means 107 is improved.

The fin 104 is orientated in a substantially horizontal position as it is transferred to the common feed guide 108. However, as with the tube 103, the orientation of the fin 104 is changed by the path of the common feed guide 108 so that the fin 104 is orientated from a substantially horizontal to a substantially vertical position as it exits the guide 108 and comes into contact with the collating surface 127 and then ultimately the support surface 102. Hence, the fin 104 is arranged in an at least substantially upright orientation on the support surface 102.

The tube conveyor means 109 and the fin conveyor means 115 are controllable and/or arranged such that they can deliver a tube 103 and a fin 104 to the collating surface 127 to form a collated tube/fin pairing 103,104 at that surface. The tube 103 and fin 104 are arranged sequentially and at least substantially vertically at the collating surface 127, whereby the fin 104 of the tube/fin pairing is positioned downstream from the tube 103. The collated tube and fin are preferably delivered substantially simultaneously to the collating surface 127. The tube conveyor means 109 and the fin conveyor means 115 are also controllable and/or arranged such that a single (individual) tube 103 and/or a single fin 104 can be delivered by the respective conveyor means to the collating surface 127 as required.

In the embodiment depicted in Figure 3; the collating surface 127 is located at an upper surface region of the collating unit 114. The collating unit 114 is operable to transfer the tube/fin pairing 103,104 from the collating surface 127 to the support surface 102.

The collating unit 114 is also operable to move the tube/fin pairing 103, 104 along the support surface 102 in direction X. As the heat exchanger core matrix is assembled this collating unit 114 moves the most recently deposited tube/fin pair past the common feed guide 108 into contact, if present, with the developing core matrix. The collating unit 114 may optionally then move the whole of the developing core matrix further along the support surface 102. In the embodiment depicted in Figure 3, the collating unit 114 is a matrix collator beam mechanism adapted to contact with a tube 103 deposited through the common guide means 108 onto the support surface 102 in order to move the tube/fin pairing 103,104 past the common guide means 108 and, if present, into contact with a previously deposited pairing and/or part developing core matrix.

Likewise, when only a single tube or fin is fed to the collating surface 127, the collating unit 114 is operable to transfer the single tube 103 or fin 104 from the collating surface 127 to the support surface 102. Moreover, the collating unit 114 is operable to move the single tube or fin along the support surface 102 in direction X.

Also shown are heat exchanger matrix retainer bars 126 located forward of the common guide means 108 and above the support surface 102. These bars 126 help to assist in retaining the components of the heat exchanger matrix in position (e.g. in an at least substantially upright orientation) as it is assembled and moved along the support surface 102 by the collating unit 114.

The apparatus 100 of Figure 3 further comprises control means (not shown) to count the number of cycles so as to determine how many tube/fin pairings 103/104 are arranged on the supporting surface 102. The apparatus further comprises a transfer unit 140 comprising a contact member 141 that is movable along a transfer bed 142. The transfer unit is operable to transfer the matrix core along the support surface 102. Preferably, the transfer unit is operable under the control of the control means and is brought into operation when the required number of tube/fin pairings are in-situ on the support surface 102.

It seems that the first few tube/fin pairings 103/104 assembled on the support surface 102 may not be sufficiently retained by the heat exchanger matrix retainer bars 126 and so they may be liable to fall over. Hence, the control means may bring the transfer unit 140 into operation so as to prime the apparatus. Prior to initiating the sequencing of any tubes 103 and fins 104 on the support surface 102, the contact member 141 is moved along the transfer bed 142 and it is arranged downstream from the common feed guide 108 so as to contact with the first, front fin 104' when it is sequentially mounted on the support surface 102. By contacting with the front fin 104' the contact member 141 supports the tube/fin pairings 103/104 located on the support surface 102 such that they do not fall over. Under the control of the control means, the contact member 141 remains in contact with the front fin 104' until a predetermined number of tube/fin pairings 103/104 have been mounted on the support surface 102. More specifically, the contact member 141 remains in contact with the front fin 104' until the developing core matrix comprises a sufficient number of tube/fin pairings 103, 104 (for example, 8 sequentially arranged tubes 103 and fins 104) such that they are able to remain upright on the supporting surface 102 only under the assistance of the heat exchanger matrix retainer bars 126.

The transfer unit 140 is preferably brought into operation to transfer a completed core matrix along the support surface 102. It is preferable that the component parts of a complete heat exchange core matrix are stacked such that it starts with a front fin 104' and also finishes with a final, rear fin 104". Accordingly, when an appropriate number of tube/fin pairings have been located on the support surface, the tube feed means 106 and the fin feed means 107 are preferably controlled such that the fin feed means 107 feeds or deposits a rear fin 104" onto the support surface 102. The contact member 141 is then arranged on the transfer bed 142 to contact with the rear fin 104" and move the rear fin 104" along the support surface 102 in the direction X. In so doing, the rear fin 104" contacts with the most recently deposited tube 103 and the completed core matrix is transferred along the support surface 102, preferably onto a further manufacturing stage.

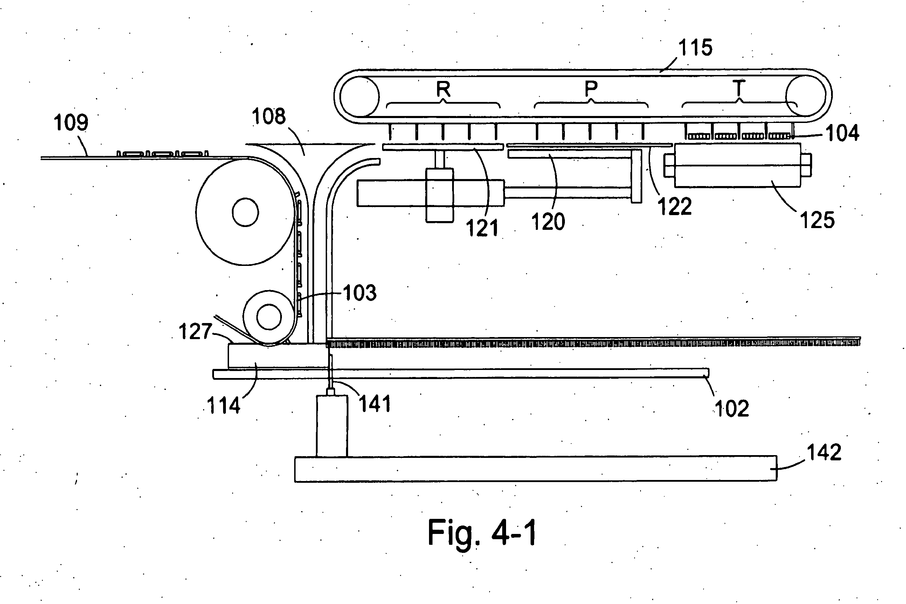

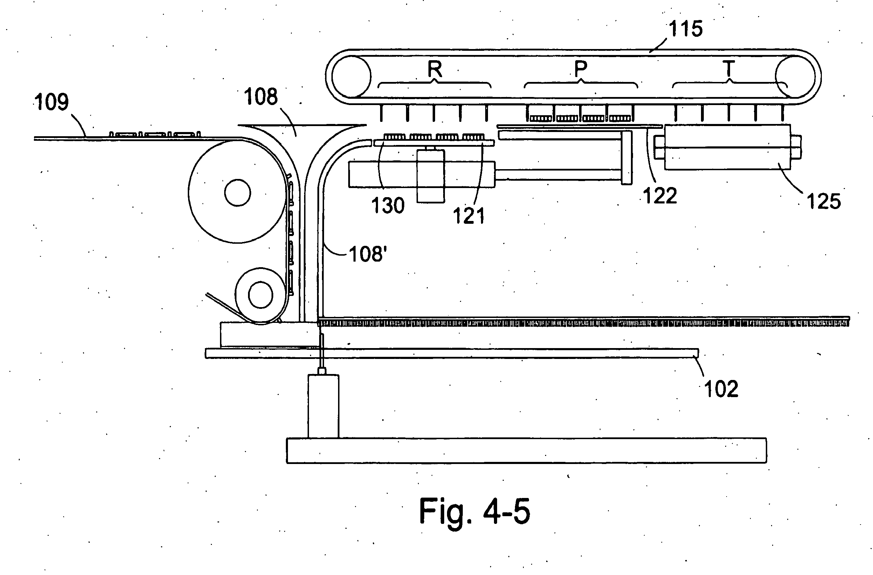

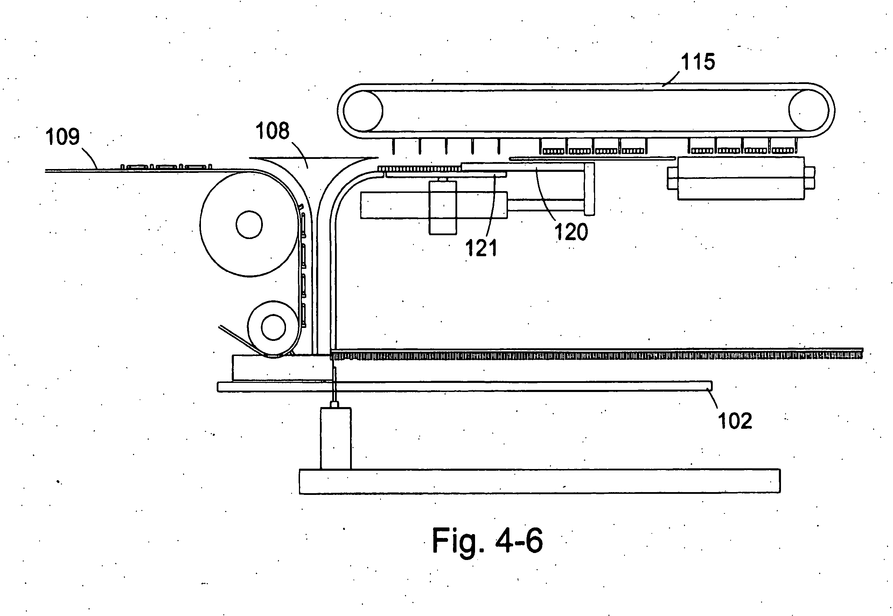

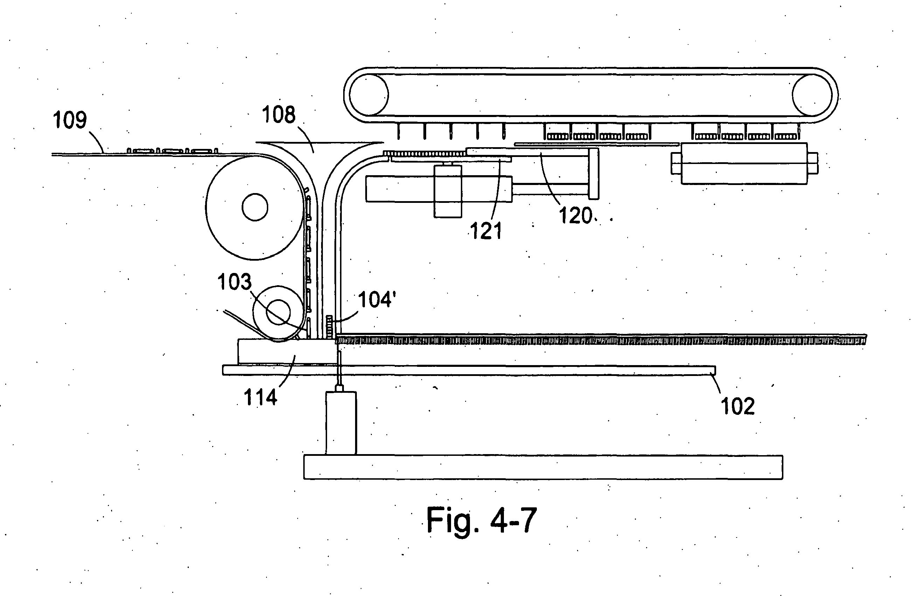

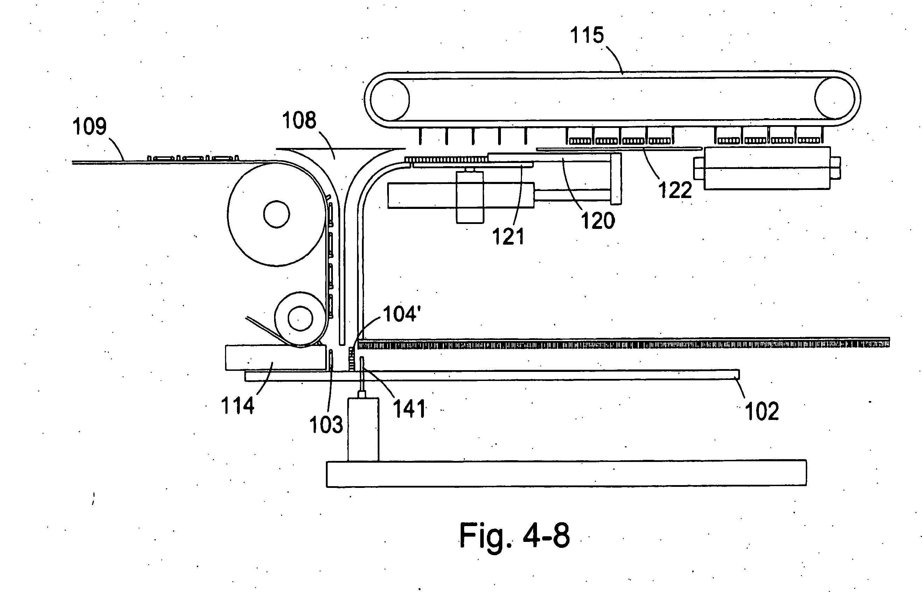

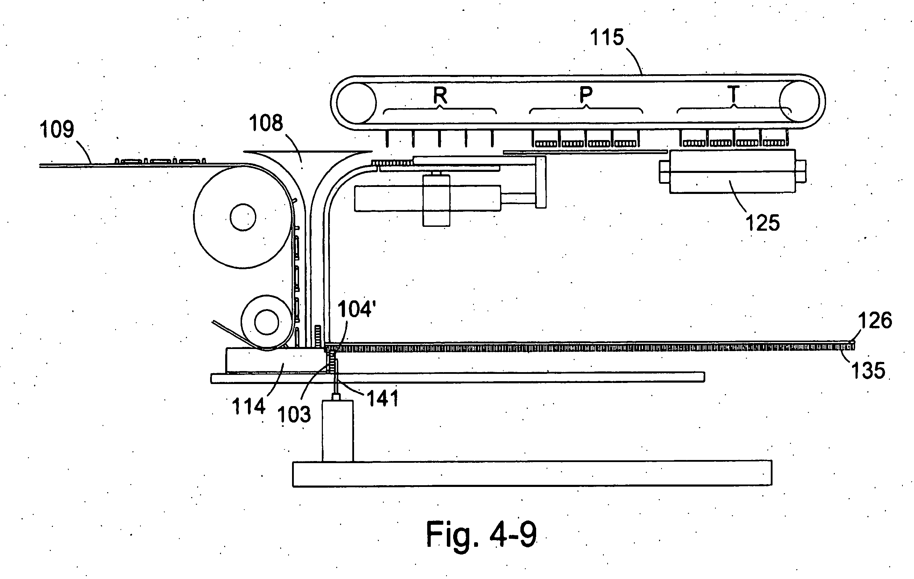

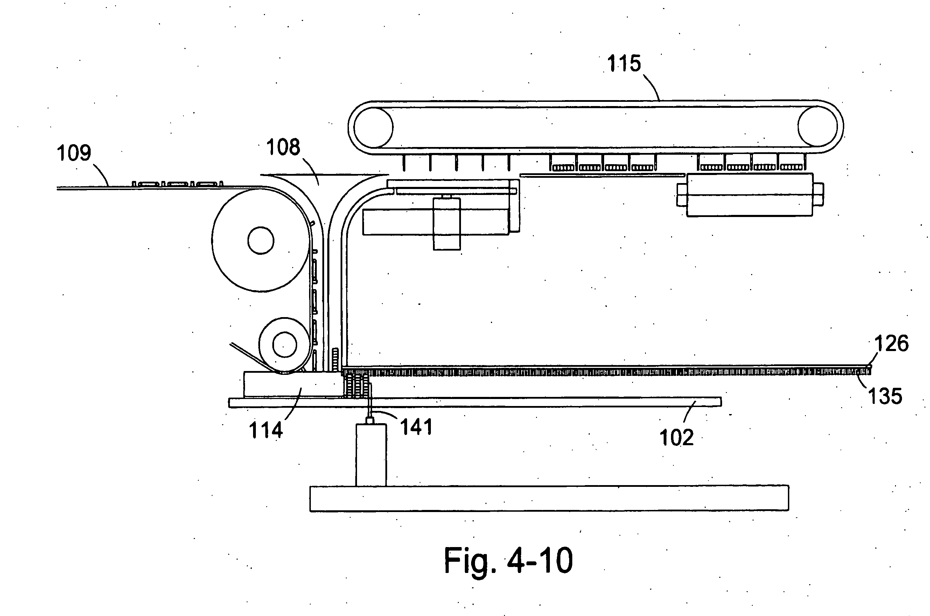

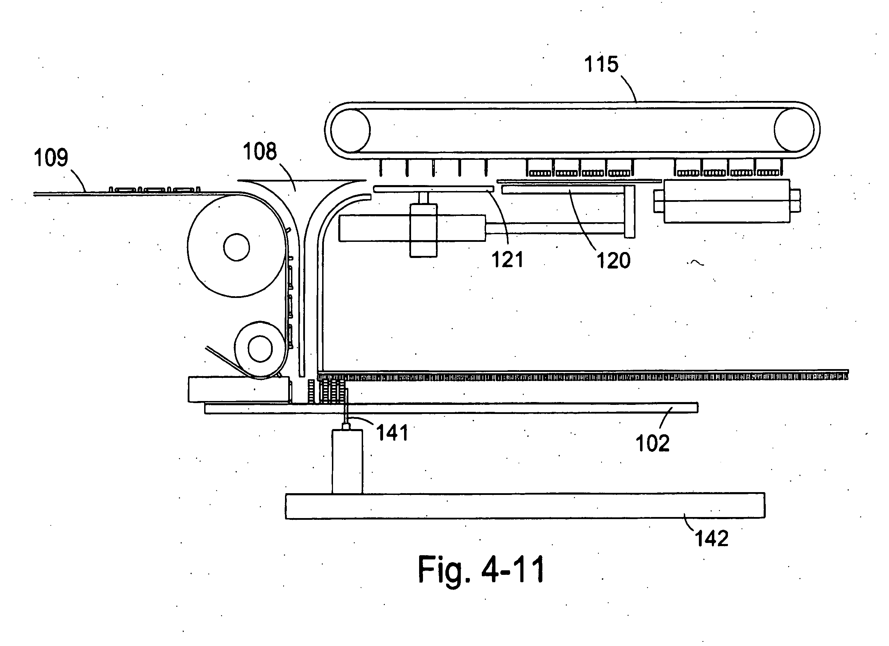

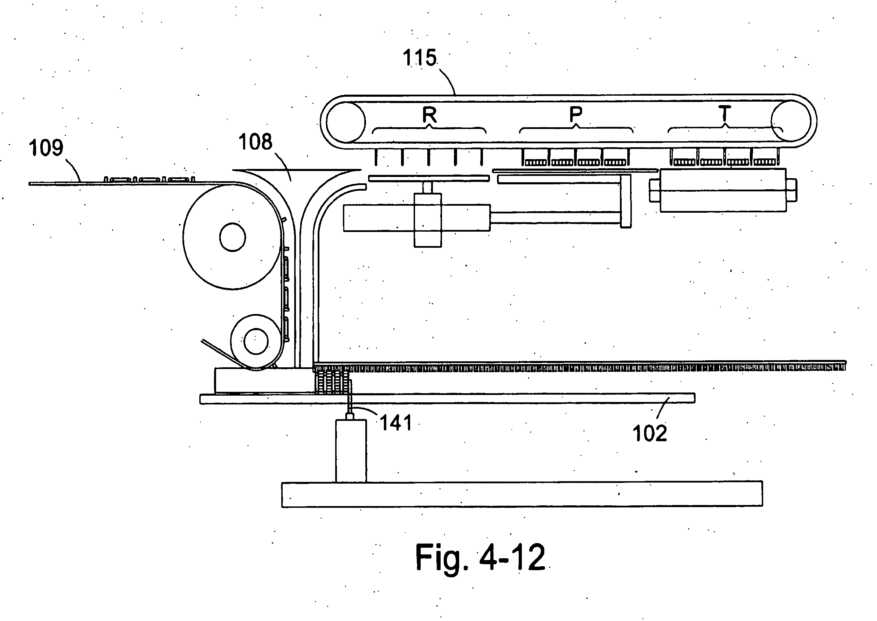

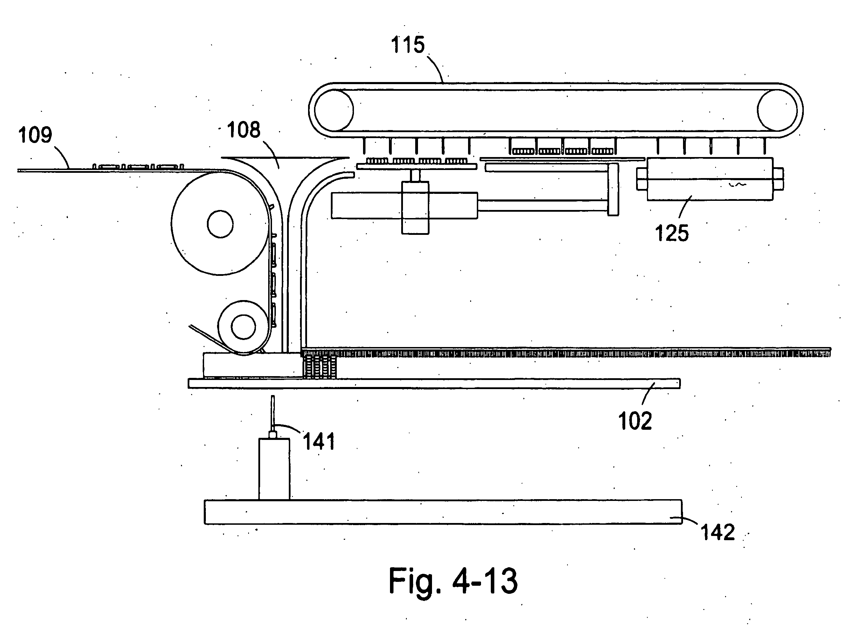

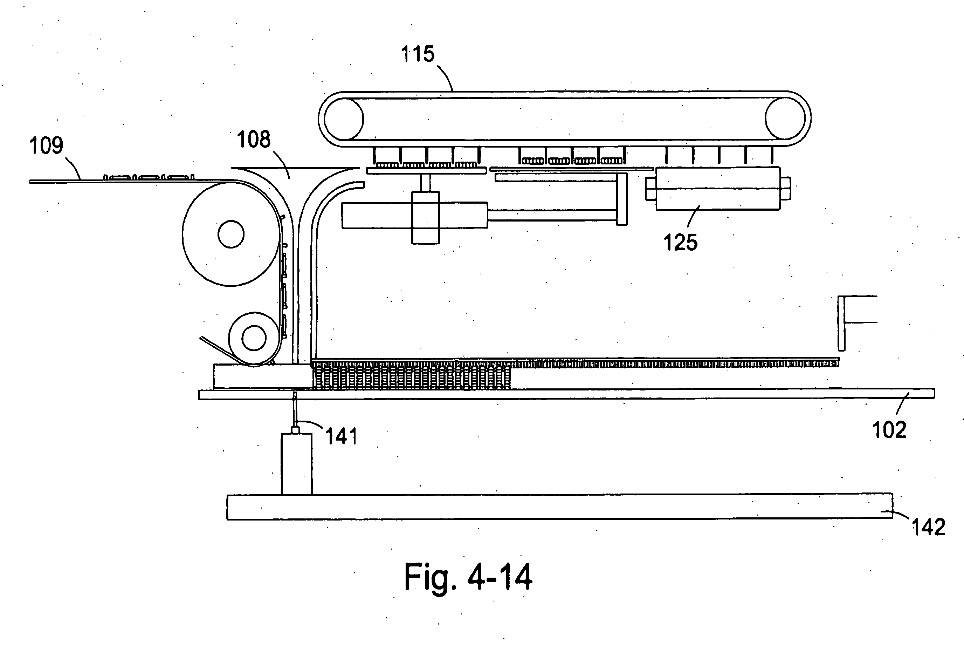

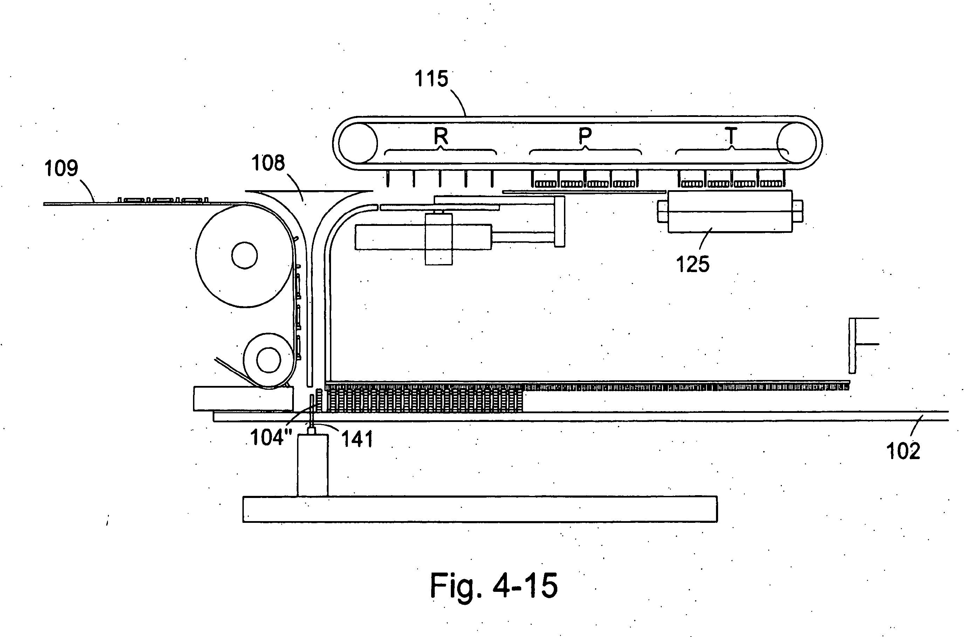

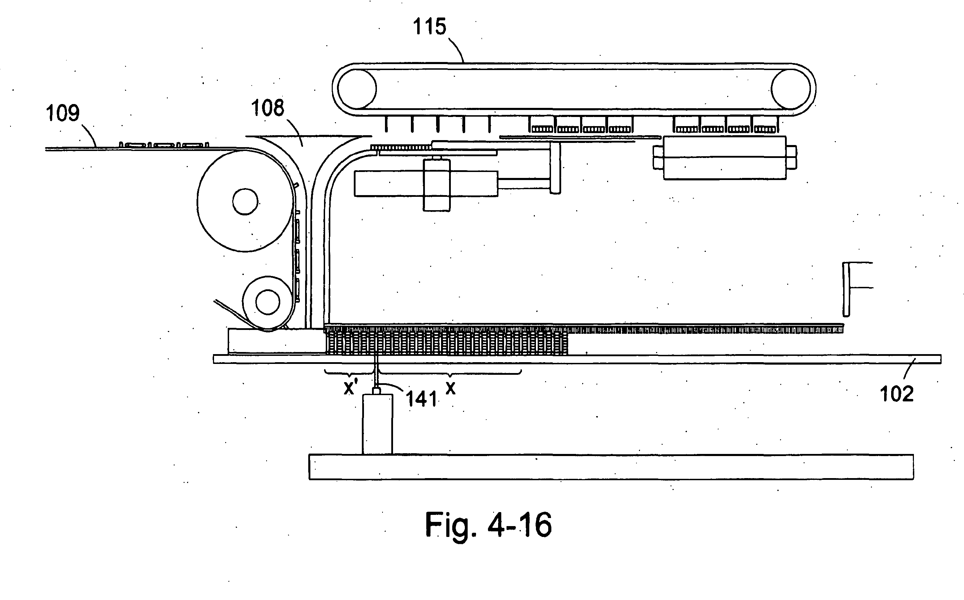

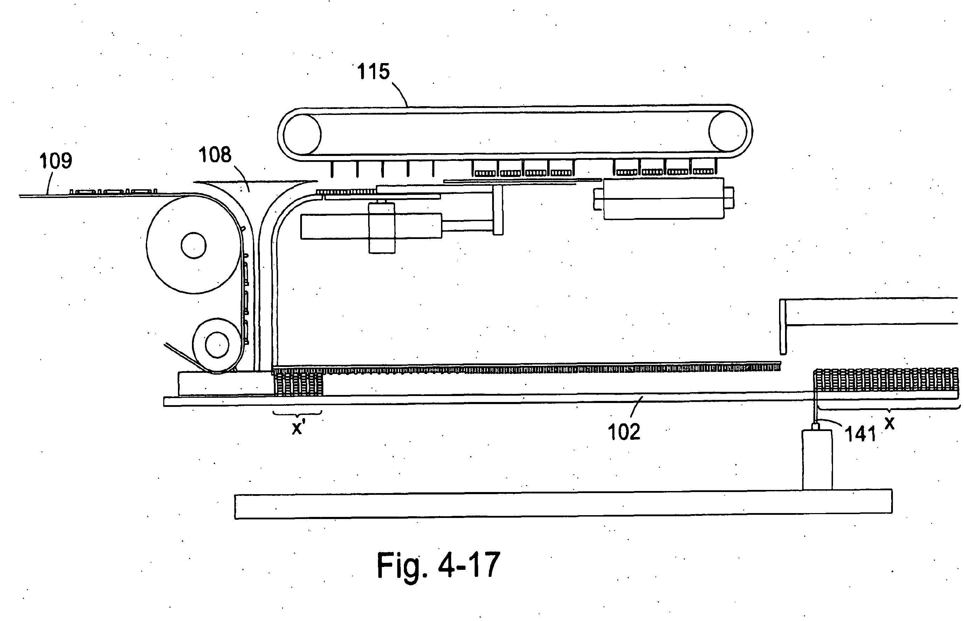

The operation of the apparatus 100 is further illustrated with reference to Figures 4-1 to 4-12.

Figure 4-1 shows the apparatus 100 at the start of the assembly cycle. The support surface 102 is clear of core matrix components. The tube conveyor means 109 is full of tubes 103 some of which are in the correct (at least substantially vertical) orientation for depositing onto the collating surface 127. The first buffer section T of the fin conveyor means 115 has been filed with fours fins, which are ready for transfer to the platform surface 122 at second, intermediate buffer section P, which is in the raised position. The collating unit 114 is in the forward position with its collating surface 127 positioned underneath the common guide 108. The contact member 141 is positioned ahead of the collating unit 114 to make contact with the front fin 104' located on the support surface 102 and thereby prevent the initial tubes 103 and fins 104 from losing their substantially vertical orientation when located on the support surface 102.

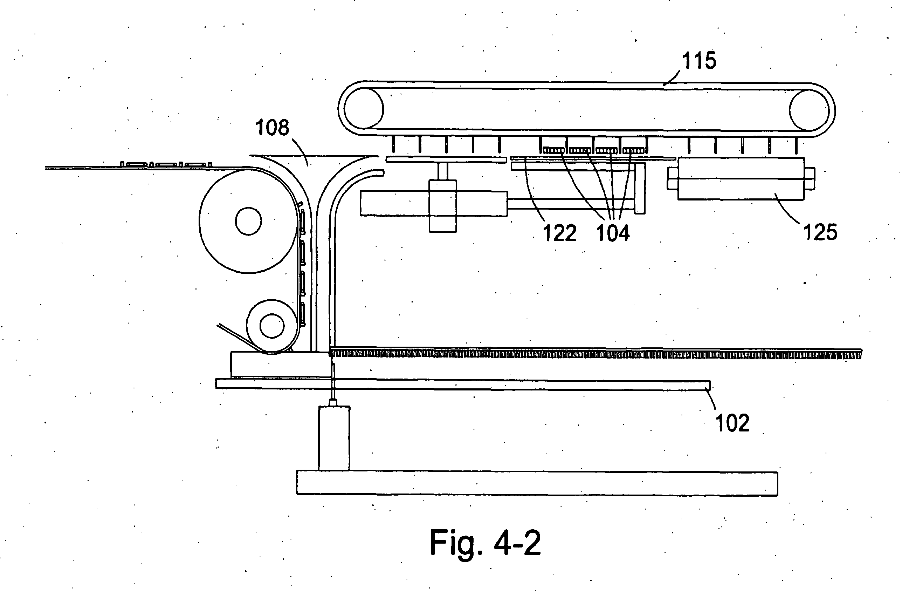

With reference to Figure 4-2, the fin conveyor means 115 has moved the four fins 104 from section T to a new second (intermediate) location P. The four fins 104 have been transferred from fin conveyor means 125 across to the fin support surface 122.

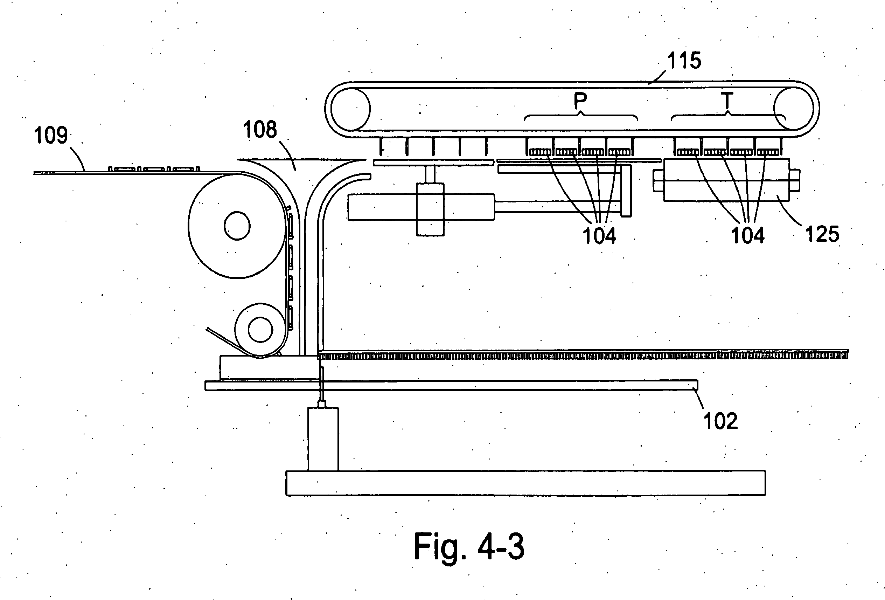

With reference to Figure 4-3, the first buffer section T of the fin conveyor means 115 is filled with a four further fins 104.

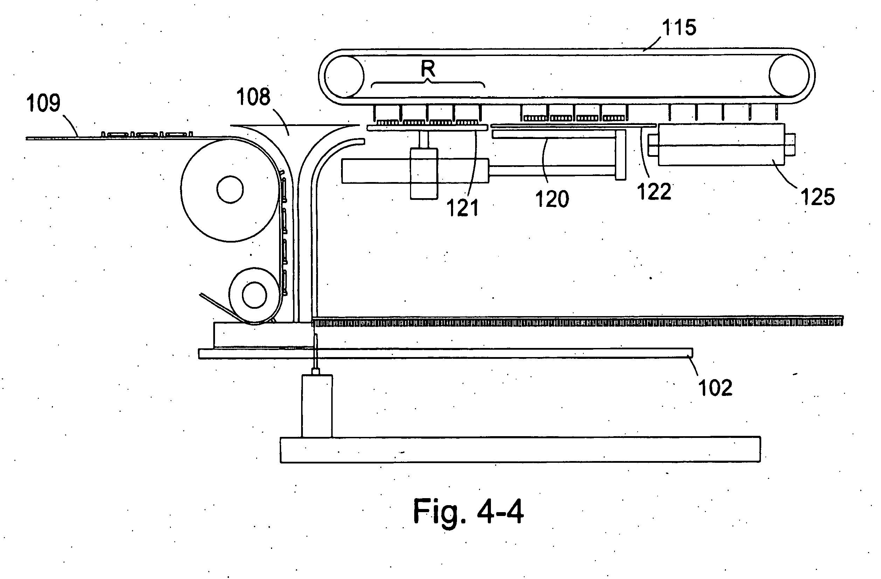

With reference to Figure 4-4, the fin conveyor means 115 has moved the four fins 104 from the second section P to a new third location R. The four fins have been transferred across the fin support surface 122 and onto the platform surface 121. The fin conveyor means has moved the fins 104 from the first section T to the second intermediate location P.

With reference to 4-5, the platform surface 121 (supporting four fins 4) has been lowered such that its front edge 130 is in alignment with the surface 131 of the common feed guide region 108'.

With reference to Figure 4-6 the pusher beam mechanism 120 is moved from its retracted position to make contact with the fins 104 on the platform surface 121 and it continues to move the fins 104 towards the common guide 108, so that they become bunched.

With reference to Figure 4-7, the pusher beam mechanism 120 continues to act upon the bunched fins 104 and forces the front fin 104' to pass into the common feed guide 108. As the front fin 104' passes into the common feed guide 108 it falls towards the collating surface 127 under the action of gravity and is rotated through 90 degrees. Simultaneously on the opposite side of the guide 108 the tube conveyor means 109 moves a tube 103 (which has passed through the common feed guide 108) into contact with the collating surface 127. At this stage a tube/fin pairing 103,104' has been collated on the collating surface 127. Although separated by the common feed guide 108, both the tube 103 and fin 104' are arranged sequentially and at least substantially vertically on the collating surface 127. The fin 104' of the pairing is arranged downstream from the tube 103.

With reference to Figure 4-8, the collating unit 114 has been moved to the retracted position and the tube/fin pairing 103,104' (that were previously located on the collating surface 127) are now sequentially arranged and at least substantially vertically orientated on the support surface 102. When previously located on the collating surface 127 the tube 103 and fin 104' are prevented from moving with the collating unit 114 (as it moves to the retracted position) due to the resistance provided by the tube conveyor means 109 with respect to the tube 103 and the common feed guide 108 with reference to the fin 104'. Thus, as the collating unit 114 was withdrawn from underneath the tube/fin pairing 103,104' and the common feed guide 108, the tube/fin pairing 103,104' fell under the action of gravity onto the support surface 102.

With reference to Figure 4-9, the collating unit 114 has been moved to a forward position so as to contact with the tube 103 and push the tube/fin pairing 103, 104' along the support surface 103 towards the contact member 141. The contact member 141 is in contact with the front fin 104' and thereby supports the tube/fin pairing. The tube/fin pairing remain substantially upright on the support table 102 by the supporting action of the contact member 141 and the brush surface 135 associated with the matrix retaining bars 126. Meanwhile, a further tube and fin have been sequentially and vertically fed to and through the common feed guide 108 and are located as tube/fin pairing 103/104 on the collating surface 127.

Figure 4-10 shows the position after a further two tube/fin pairings have been deposited onto the support surface 102. The collating unit 114 has been moved back into the forward position and, in doing so, it has made contact with the last tube/fin pairing that was transferred from the collating surface 127 and move that pairing from beneath the common feed guide 8 and into contact with previously deposited tube/fin pairings. In this way the core matrix (x) is assembled on the support surface 2 and is held together in part by the action of the contact member 141 and the brush surface 135 associated with matrix retainer bars 126. The pusher beam mechanism 120 is in the fully extended position and the first buffer section T and second buffer section P of the fin conveyor means 115 have each been filed with a further four fins 104. The platform surface 121 is in the lowered position. The last tube/fin pairing of the initial four pairing transfer cycle is located on the collating surface 127 waiting to be transferred to the support surface 102.

With reference to Figure 4-11, the last pairing 103,104 has been transferred to support surface 102. The collating unit 114 is in the retracted position in contact with the last tube 103 of the four pairing transfer cycle, the pusher beam mechanism 120 is now fully retracted and the platform surface 121 has been raised ready to receive the next batch of fins 104 from the fin conveyor means 115.

With reference to Figure 4-12 the four pairing transfer cycle has been completed and there are now a sufficient number of core matrix components on the support surface 102 such that the contact member 141 is not longer required to hold the developing core matrix together and upright. Accordingly, with reference to Figure 4-13, the contact member 141 is retracted leaving the brush surface 135 and retainer bars 126 to support the core matrix components.

With reference to Figure 4-14, the pairing transfer cycle has been repeated a number of times and multiple tube/fin pairings have been assembled and are held in position on the support surface 102. The apparatus comprises control means operable to count the number of cycles and bring the transfer unit 140 into operation when the required number of tube/fin pairings are in-situ on the support table. The transfer unit 140 comprises a contact member 141, which is shown in the retracted position, and a transfer bed 142.

It is preferable for a heat exchanger core matrix to start with a front fin 104' and finish with a rear fin 104". Hence, with reference to Figure 4-15, a rear fin 104" has been fed through the common guide means 108 and is located on the support surface 102. The contact member 141 has been raised to make contact with the rear fin 104". With reference to Figure 4-16, the contact member 141 in contact with the rear fin 104 is moved along the transfer bed 142 and, in so doing, it transfers the now completed core matrix (x) along the support surface 102 as a further core matrix (x') is being assembled behind the contact member 141.

With reference to Figure 4-17, the contact member 141 has moved along the transfer bed 142 and transferred the completed core matrix (x) to the end of the support surface 102. The completed core matrix is now free of the retainer bars 26 and associated brush surfaces 35 and it is preferably retained in position by the movable stop member (not shown). The completed core matrix (x) is now ready to be moved to further stages of the heat exchanger assembly process. The contact member 141 is subsequently retracted and returned to its starting position for the next transfer cycle.

As mentioned previously with respect to the embodiments depicted in Figures 1 to 4-7, the indexed belt 16, 116 of the fin conveyor means 15, 115 is supplied with fins from a fin manufacturing unit via the fin conveyor system 25,125.

Typically, fins are manufactured by cutting a convoluted strip into discrete portions (having a predetermined length and/or number of convolutions) as the strip is being fed onto the fin conveyor system. It is of key importance that the overall fin dimensions of every cut fin are identical and maintained (i.e. fin length, fin pitch etc.). If a fin does not have the requisite dimensions then it may be unsuitable for use in a heat exchanger core matrix.

Unfortunately, it has been found that fins are prone to skidding or slipping along conventional fin conveyor systems. It is apparent that fins are particularly prone to skidding during the feed and cutting phase and also when the fin conveyor system is accelerating to reach conveyor speed/decelerating from conveyor speed. As the fins skid along the fin conveyor system, there is a risk that the fins may become damaged and/or the fin length or fin pitch may be deleteriously affected.

So as to provide sufficient time to check for and remove any unsuitable fins from a conventional fin conveyor system, it has become necessary to configure fin conveyor systems with an appropriate length. For longer fins, the required length of the fin conveyor system becomes significant and it has an impact on the overall machine footprint.

It has been found that there is also a risk of damaging fins and/or changing the dimensions of fins as they abut one or mechanical stops arranged on a conventional fin conveyor system. This is a particular risk when the fin conveyor system is decelerating from conveyor speed.

So as to minimize the skidding or slipping of a fin, the fin conveyor system 25, 125 of the present invention preferably comprises one or more blades or flights. The flights are configured to extend into the convolutions of the fin and thereby interface with the fins. The flights are deemed to apply a drive to the fin, in other words, the flights have an engaging or retaining effect on the fin. This retaining effect at least restricts or prevents any skidding or slipping of the fin along belt of the fin conveyor system. The flights are generally elongate portions that protrude outwardly away from the outer surface of the conveyor belt. The flights are preferably evenly spaced to as to provide an even drive or retaining effect between sections of the fins. The flights may be integrally formed or coupled to the belt.

Since the flights accurately and precisely position a fin on the belt of the fin conveyor the use of one or more mechanical stops is now unnecessary.

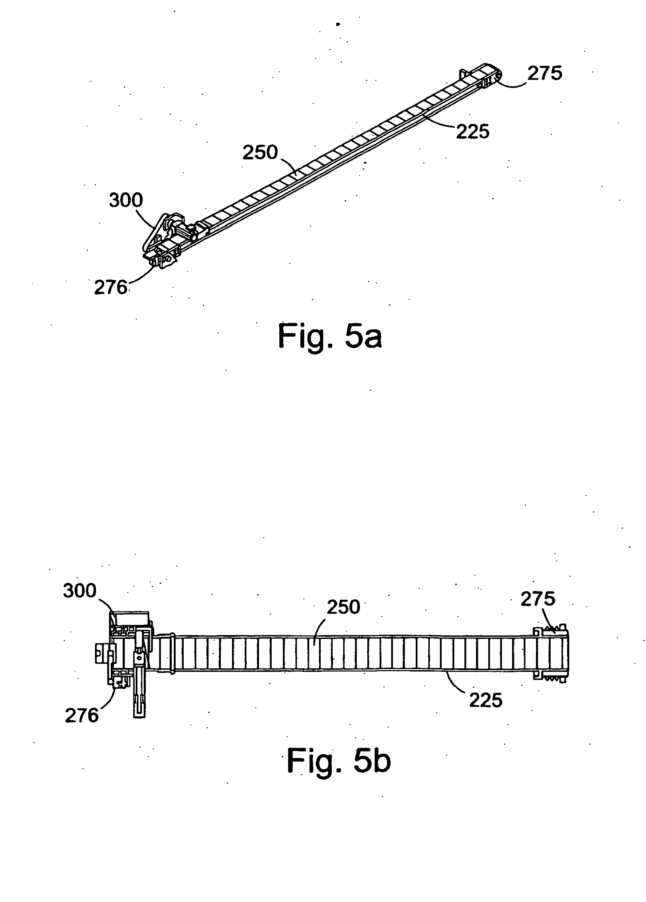

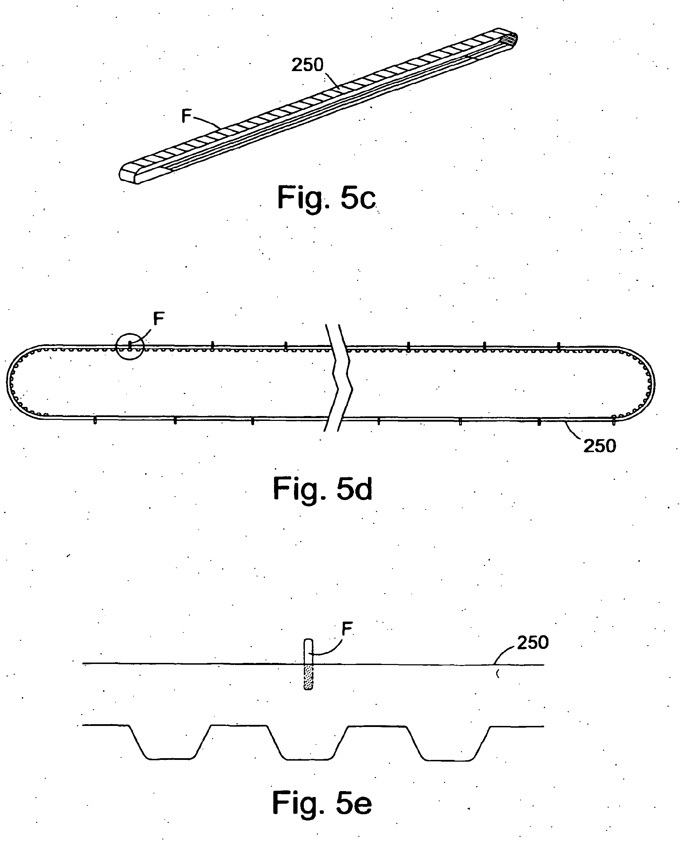

Figures 5a to 5d depict an embodiment of a fin conveyor system 225 according to the present invention. The fin conveyor system 225 comprises a belt 250 with a belt length of 7800mm and 78 flights F equally spaced around the belt at 100mm intervals. Each flight F is a steel pin member secured to the outer surface of the belt, having a protruding length of 2mm and width of 0.3mm. The belt 250 is driven by a pair of belt rollers 275, 276. One or both of the rollers is drive by motorized drive means. Figures 5a and 5b depict the fin conveyor system arranged in association with a fin manufacturing unit 300. The fin manufacturing unit 300 comprises feed means to feed a convoluted aluminum strip onto the belt of the fin conveyor system and cutting means to cut the strip into discrete portions having a predetermined length and/or number of convolutions as the strip is fed onto the belt.

So as to minimize the skidding of fins, the speed of the fin conveyor system in the present invention may additionally or alternatively be regulated or synchronized with respect to the feed and cutting rate of the fin manufacturing unit, particularly during the feed and cutting phase. It has been found that the synchronization of the fin conveyor speed with respect to the feed and cutting rate of the fin manufacturing unit during the feed and cutting phase also helps to improve the tracking effect provided by the flights. Following the cutting of a fin, the fin conveyor system may be accelerated relative to the fin manufacturing unit to allow for the generation of a gap. Synchronization of speed may be achieved by using drive control means to implement a digital locking between the drive means of the fin conveyor system and drive means of the fin manufacturing unit.

The skidding of fins may also or alternatively minimized by using drive control means to apply a predetermined cam profile to regulate the drive controllers of the fin conveyor system and/or fin manufacturing unit during a fin transfer cycle. By controlling the speed profile of the fin conveyor system relative to the fin manufacturing unit during the transfer cycle high operating rates and quality are achievable.

The use of flights and/or drive control means reduces the risk of damaging the fin or altering the fins dimensions, removes the need for mechanical indicating stops, reduces the conveyor length, improves the operating rate and quality of fins produced and allows for the manufacture of longer fins.

The fin conveyor system as described may be used in its own right for any apparatus for assembling a heat exchanger core matrix. The fin conveyor system is not restricted to the apparatus and method of assembling a heat exchanger core matrix as described.

## Claims

1. An apparatus for assembling a heat exchanger core matrix, the apparatus comprising:- (i) tube feed means (6, 106) for feeding heat exchanger tubes (3, 103) to a support surface (2, 102); and (ii) fin feed means (7, 107) for feeding heat exchanger fins (4, 104) to the support surface (2, 102); wherein the tube feed means (6, 106) and the fin feed means (7, 107) are located above the support surface and, in use, the apparatus is operable to sequentially and vertically feed the tubes (3, 103) and fins (4, 104) to the support surface (2, 102) via a feed guide (8, 108), **characterised in that** the tubes (3, 103) and fins (4, 104) are fed by a common feed guide (8, 108).

2. Apparatus according to claim 1, wherein the apparatus comprises tube storage means (5, 105) in which a plurality of heat exchanger tubes (3, 103) are stored.

3. Apparatus according to claim 1 or 2, wherein the tube feed means (6, 106) is operable to sequentially feed tubes (3, 103) to the common feed guide (8, 108).

4. Apparatus according to claims 1 to 3, wherein the tube feed means (6, 106) is operable to sequentially feed tubes (3, 103) to the support surface (2, 102) through the common feed guide (8, 108).

5. Apparatus according to any one of the preceding claims the tube feed means (6, 106) is operable to feed a tube (3, 103) from said tube storage means (5, 105) to the common feed guide (8, 108) in a continuous process.

6. Apparatus according to any one of the preceding claims where in the tube feed means (6, 106) comprises a conveyor means (9, 109) for transportation of the tubes (3, 103) to and through the common feed guide (8, 108);
and optionally wherein the tube conveyor means (9, 109) comprises an indexed belt (9', 109') having flights (10, 110) at regular intervals for holding tubes (3, 103) in the desired orientation for passage through the common feed guide (8, 108) and for presentation to the support surface (2, 102) at the required interval.

7. Apparatus according to claim 6 wherein the tube conveyor means (9, 109) comprises a belt (9', 109') with two laterally spaced belt rollers (11, 12, 111, 112), at least one of which (12, 112) is a driven roller.

8. Apparatus according to claims 6 and 7 wherein the tube conveyor means (9, 109) is arranged to deliver the tubes (3, 103) in-line with the direction of assembly of the heat exchanger.

9. Apparatus according to claims 6 to 8 wherein the conveyor means (9, 109) further comprises a guide roller (13, 113) working in combination with the belt rollers (11, 12, 111, 112) to guide the conveyor belt (9', 109') through the common feed guide (8, 108);
and optionally wherein the guide roller (13, 113) is located forward of the rotational axis (A) of the belt roller (12, 112) proximate to the common feed guide (8, 108).

10. Apparatus according to any preceding claims wherein the tube storage means (5, 105) is arranged such that the tube (3, 103) in the tube storage means (5, 105) rests upon an upper edge of the tube conveyor belt (9', 109') so that, as the belt rotates, the flights (10, 110) move past tubes (3, 103) in the tube storage means (5, 105), and thereby receive tubes (3, 103).

11. Apparatus according to any preceding claims wherein the tube feed means (6, 106) with reference to the direction of heat exchanger core matrix manufacture is positioned inline and upstream of the common feed guide (8, 108);
and optionally wherein the tubes (3, 103) are transferred from the tube storage means (5, 105) to the common feed guide (8, 108) along the line of manufacture.

12. Apparatus according to any preceding claims wherein the fin feed means (7, 107) for feeding heat exchanger fins (4, 104) to the support surface (2, 102) is positioned inline, and downstream of the common feed guide (8, 108);
and optionally wherein the fins (4, 104) are presented to the common feed guide (8, 108) by means for transferring the fins (4, 104) from a fin storage or manufacturing means in the opposite direction to the direction of tube transfer to the common feed guide (8, 108).

13. Apparatus according to claim 12 wherein the fin feed means (7, 107) comprises a fin conveyor means (15, 115) adapted to secure the fins (4, 104) in the required orientation for presentation to the common feed guide (8, 108) and the required interval;
and optionally wherein the fin conveyor means (15, 115) comprises an indexed belt (16, 116) and two laterally spaced belt rollers (17, 18, 117, 118), at least one of which (18, 118) is a driven roller, which enable the fin conveyor means (15, 115) to deliver the fins (4, 104) in-line in the opposing direction to the direction of assembly of the heat exchanger core matrix.

14. Apparatus according to claims 12 or 13 wherein the fin conveyor means (15, 115) works in cooperation with a platform delivery mechanism (19, 119) to deliver the required fins (4, 104) from the indexed conveyor means (15, 115) to the common feed guide (8, 108);
and optionally wherein the platform delivery mechanism (19, 119) works in cooperation with a pusher beam mechanism (20, 120) for transferring fins (4, 104) from the platform surface (21, 121) and into the common feed guide (8, 108).

15. Apparatus according to claim 13 wherein the fin conveyor means (15, 115) transfers the fins (4, 104) towards the common feed guide (8, 108) with the fins (4, 104) in contact with a fin support surface (22, 122).

16. Apparatus according to claim 14 wherein the platform delivery mechanism (19, 119) is located such that its top surface (21, 121) is co-planar with the top surface of a fin support surface (22, 122);
and optionally wherein the top surface (21, 121) of the platform delivery mechanism (19, 119) may be moved from being co-planar to the fin support surface (22, 122) to a level below the fin support surface (22, 122) proximate to the common feed guide (8, 108).

17. Apparatus according to claim 13 wherein the fin conveyor means (15, 115) is supplied with fins (4, 104) from a fin manufacturing unit via a fin conveyor system (25, 125, 225) which presents the fins (4, 104) to the fin conveyor means (15, 115) perpendicular to the direction of movement of the indexed fin conveyor means (15, 115);
and optionally wherein the fin conveyor system (25, 125, 225) comprises a plurality of flights to interface into the fin convolutions.

18. Apparatus according to claim 17 wherein the speed of the fin conveyor system (25,125,225) is synchronized with respect to the feed and cut rate of the fin manufacturing unit;
and optionally wherein the apparatus comprises drive control means to synchronize the speed of the fin conveyor system (25,125,225) and the fin manufacturing unit.

19. Apparatus according to claim 18 wherein the apparatus comprises drive control means to apply a cam profile to the fin conveyor system (25,125,225) and/or fin manufacturing unit (300).

20. Apparatus according to claim 13 wherein the fin conveyor means (15,115) comprises a continuous series of indexed regions (R,T,P).

21. Apparatus according to claim 13 wherein the fin conveyor means (15,115) comprises a series of separated regions of indexation enabling two or more fins (4,104) to be supplied to the platform at a given point In the manufacturing cycle.

22. Apparatus according to any preceding claims further comprising a collating means (14,114) operable to move at least one tube (3,103) or fin (4,104) along the support surface (2,102), and preferably the heat exchanger core matrix as it is assembled along the support surface (2,102);
and optionally wherein the collating means (14,114) is a matrix collator beam mechanism adapted to contact with a tube (3,103) deposited through the common feed guide (8,108) onto the support surface (2,102) in order to move the tube (3,103) past the common feed guide (8, 108).

23. Apparatus according to any preceding claims further comprising control means to count the number of tube (3,103) and fins (4,104) located on the support surface (2,102).

24. Apparatus according to any preceding claims further comprising a transfer unit (40,140) to transfer the heat exchanger core matrix along the support surface (2,102) when assembled;
and optionally wherein the transfer unit (40,140) is operable to support tubes (3,103) and fins (4,104) located on the support surface (2,102) during a first assembly phase.

25. Apparatus according to any preceding claim further comprising heat exchanger matrix retainer bars (28,128) located forward of the common feed guide (8,108) and above the support surface (2,102).

26. Apparatus according to any preceding claim further comprising a fin conveyor system (25,125,225) for supplying at least one fin (4,104) to the apparatus for assembling a heat exchanger core matrix; the system comprising a belt (250) having flights (F) at regular intervals, whereby each flight (F) is configured to interface into a convolution of the fin (4,104) and thereby provide a retaining effect;
and optionally wherein the system comprises drive control means to synchronize the speed of the fin conveyor system with respect to the feed and cutting rate of an associated fin manufacturing unit.

27. Apparatus according to claim 26, further comprising drive control means to apply a cam profile to the fin conveyor system (25.125,225) so as to regulate the speed of the fin conveyor system (25,125,225) over a fin transfer cycle with respect to the feed and cutting rate of the associated fin manufacturing unit (300).

28. A method of assembling a heat exchanger core matrix, the method comprising the steps of:- (I) feeding a tube (3,103) vertically to a collating surface (27,127) through a feed guide (8,108); (ii) feeding a fin (4,104) vertically to the collating surface (27,127) through a feed guide (8,108) to sequentially locate the fin (4,104) on the collating surface (27,127) downstream of the tube (3,103); (iii) transferring the tube (3,103) and fin (4,104) pairing from the collating surface (27,127) to a support surface (2,102); (iv) moving the tube (3,103) and fin (4,104) pairing along the support surface (2,102) and (v) repeating steps (i) to (iv) to assemble a predetermined number of tube (3.103) and fin (4,104) pairings on the support surface (2,102), **characterised in that** the tube (3,103) and the fin (4,104) are fed through a common feed guide (8, 108).

29. The method of claim 28 further comprising the steps of:- (vi) having assembled a predetermined number of tube (3,103) and fin (4,104) pairings on the support surface feeding a fin (4,104) vertically to the collating surface (27,127) through the common feed guide (8,108); (vii) transferring the fin (4,104) from the collating surface (27,127) to the support surface (2,102); and (viii) moving the fin (4,104) along the support surface (2,102) to contact with the tube (3,103) last located on the support surface (2,102).

## Patentansprüche

1. Vorrichtung für das Montieren einer Wärmetauscherblockmatrix, wobei die Vorrichtung aufweist: (i) ein Rohrzuführmittel (6, 106) für das Zuführen der Wärmetauscherrohre (3, 103) zu einer Auflagefläche (2, 102); und (ii) ein Rippenzuführmittel (7) für das Zuführen der Wärmetauscherrippen (4, 104) zur Auflagefläche (2, 102); wobei das Rohrzuführmittel (6, 106) und das Rippenzuführmittel (7, 107) über der Auflagefläche angeordnet sind und die Vorrichtung bei Benutzung funktionsfähig ist, um die Rohre (3, 103) und die Rippen (4, 104) aufeinanderfolgend und vertikal zur Auflagefläche (2, 102) mittels einer Zuführführung (8, 108) zuzuführen, **dadurch gekennzeichnet, dass** die Rohre (3, 103) und die Rippen (4, 104) mittels einer gemeinsamen Zuführführung (8, 108) zugeführt werden.

2. Vorrichtung nach Anspruch 1, bei der die Vorrichtung ein Rohrlagermittel (5, 105) aufweist, in dem eine Vielzahl von Wärmetauscherrohren (3, 103) gelagert wird.

3. Vorrichtung nach Anspruch 1 oder 2, bei der das Rohrzuführmittel (6, 106) funktionsfähig ist, um die Rohre (3, 103) aufeinanderfolgend der gemeinsamen Zuführführung (8, 108) zuzuführen.

4. Vorrichtung nach den Ansprüchen 1 bis 3, bei der das Rohrzuführmittel (6, 106) funktionsfähig ist, um die Rohre (3, 103) aufeinanderfolgend zur Auflagefläche (2, 102) mittels der gemeinsamen Zuführführung (8, 108) zuzuführen.

5. Vorrichtung nach einem der vorhergehenden Ansprüche, bei der das Rohrzuführmittel (6, 106) funktionsfähig ist, um ein Rohr (3, 103) von dem Rohrlagermittel (5, 105) zur gemeinsamen Zuführführung (8, 108) in einem kontinuierlichen Vorgang zuzuführen.

6. Vorrichtung nach einem der vorhergehenden Ansprüche, bei der das Rohrzuführmittel (6, 106) ein Fördermittel (9, 109) für das Transportieren der Rohre (3, 103) zur und durch die gemeinsame Zuführführung (8, 108) aufweist;
und wobei wahlweise das Rohrfördermittel (9, 109) ein Schaltband (9', 109') mit Mitnehmern (10, 110) in regelmäßigen Intervallen für das Halten der Rohre (3, 103) in der gewünschten Ausrichtung für einen Durchgang durch die gemeinsame Zuführführung (8, 108) und für das Vorlegen auf der Auflagefläche (2, 102) im geforderten Intervall aufweist.

7. Vorrichtung nach Anspruch 6, bei der das Rohrfördermittel (9, 109) ein Band (9', 109') mit zwei seitlich beabstandeten Bandrollen (11, 12, 111, 112) aufweist, von denen mindestens eine (12, 112) eine angetriebene Rolle ist.

8. Vorrichtung nach den Ansprüchen 6 und 7, bei der das Rohrfördermittel (9, 109) angeordnet ist, um die Rohre (3, 103) in Übereinstimmung mit der Montagerichtung des Wärmetauschers zu liefern.

9. Vorrichtung nach den Ansprüchen 6 bis 8, bei der das Fördermittel (9, 109) außerdem eine Führungsrolle (13, 113) aufweist, die in Verbindung mit den Bandrollen (11, 12, 111, 112) arbeitet, um das Förderband (9', 109') durch die gemeinsame Zuführführung (8, 108) zu führen;
und bei der wahlweise die Führungsrolle (13, 113) vor der Rotationsachse (A) der Bandrolle (12, 112) in unmittelbarer Nähe der gemeinsamen Zuführführung (8, 108) angeordnet ist.

10. Vorrichtung nach einem der vorhergehenden Ansprüche, bei der das Rohrlagermittel (5, 105) so angeordnet ist, dass ein Rohr (3, 103) in dem Rohrlagermittel (5, 105) auf einem oberen Rand des Rohrförderbandes (9', 109') aufliegt, so dass, während sich das Band dreht, sich die Mitnehmer (10, 110) an den Rohren (3, 103) in dem Rohrlagermittel (5, 105) vorbeibewegen und dadurch die Rohre (3, 103) aufnehmen.

11. Vorrichtung nach einem der vorhergehenden Ansprüche, bei der das Rohrzuführmittel (6, 106) mit Bezugnahme auf die Richtung der Fertigung der Wärmetauscherblockmatrix in einer Reihe liegend und stromaufwärts von der gemeinsamen Zuführführung (8, 108) positioniert ist;
und bei der wahlweise die Rohre (3, 103) von dem Rohrlagermittel (5, 105) zur gemeinsamen Zuführführung (8, 108) längs der Fertigungsstrecke übertragen werden.

12. Vorrichtung nach einem der vorhergehenden Ansprüche, bei der das Rippenzuführmittel (7, 107) für das Zuführen der Wärmetauscherrippen (4, 104) zur Auflagefläche (2, 102) in einer Reihe liegend und stromabwärts von der gemeinsamen Zuführführung (8, 108) positioniert ist;
und bei der wahlweise die Rippen (4, 104) der gemeinsamen Zuführführung (8, 108) mittels Mitteln zum Übertragen der Rippen (4, 104) von einem Rippenlager- oder -fertigungsmittel in der entgegengesetzten Richtung zur Richtung der Rohrübertragung zur gemeinsamen Zuführführung (8, 108) vorgelegt werden.

13. Vorrichtung nach Anspruch 12, bei der das Rippenzuführmittel (7, 107) ein Rippenfördermittel (15, 115) aufweist, die ausgebildet ist, um die Rippen (4, 104) in der erforderlichen Ausrichtung für die Vorlage bei der gemeinsamen Zuführführung (8, 108) und mit dem geforderten Intervall zu sichern;
und bei der wahlweise das Rippenfördermittel (15, 115) ein Schaltband (16, 116) und zwei seitlich beabstandete Bandrollen (17, 18, 117, 118) aufweist, von denen mindestens eine (18, 118) eine angetriebene Rolle ist, die das Rippenfördermittel (15, 115) in die Lage versetzen, die Rippen (4, 104) in einer Reihe in der entgegengesetzten Richtung zur Montage der Wärmetauscherblockmatrix zu liefern.

14. Vorrichtung nach Anspruch 12 oder 13, bei der das Rippenfördermittel (15, 115) in Zusammenarbeit mit einem Plattformzuführmechanismus (19, 119) arbeitet, um die angeforderten Rippen (4, 104) von dem Schaltfördermittel (15, 115) zur gemeinsamen Zuführführung (8, 108) zu liefern;
und bei der wahlweise der Plattformzuführmechanismus (19, 119) in Zusammenarbeit mit einem Ausstoßschienenmechanismus (20, 120) für das Übertragen von Rippen (4, 104) von einer Plattformoberfläche (21, 121) und in die gemeinsame Zuführführung (8, 108) arbeitet.

15. Vorrichtung nach Anspruch 13, bei der das Rippenfördermittel (15, 115) die Rippen (4, 104) in Richtung der gemeinsamen Zuführführung (8, 108) überträgt, wobei die Rippen (4, 104) in Kontakt mit einer Rippenauflagefläche (22, 122) sind.

16. Vorrichtung nach Anspruch 14, bei der der Plattformzuführmechanismus (19, 119) so angeordnet ist, dass seine obere Fläche (21, 121) koplanar mit der oberen Fläche einer Rippenauflagefläche (22, 122) ist;
und bei der wahlweise die obere Fläche (21, 121) des Plattformzuführmechanismus (19, 119) weg vom koplanaren Zustand zur Rippenauflagefläche (22, 122) auf ein Niveau unterhalb der Rippenauflagefläche (22, 122) in unmittelbarer Nähe der gemeinsamen Zuführführung (8, 108) bewegt werden kann.

17. Vorrichtung nach Anspruch 13, bei der das Rippenfördermittel (15, 115) mit Rippen (4, 104) von einer Rippenfertigungseinheit mittels eines Rippenfördersystems (25, 125, 225) versorgt wird, das die Rippen (4, 104) dem Rippenfördermittel (15, 115) senkrecht zur Bewegungsrichtung des Schaltrippenfördermittels (15, 115) vorlegt;
und bei der wahlweise das Rippenfördersystem (25, 125, 225) eine Vielzahl von Mitnehmern aufweist, um sich an die Rippenwellen anzupassen.

18. Vorrichtung nach Anspruch 17, bei der die Geschwindigkeit des Rippenfördersystems (25, 125, 225) mit Bezugnahme auf die Zuführ- und Schnittgeschwindigkeit der Rippenfertigungseinheit synchronisiert wird;
und bei der wahlweise die Vorrichtung ein Antriebssteuermittel aufweist, um die Geschwindigkeit des Rippenfördersystems (25, 125, 225) und der Rippenfertigungseinheit zu synchronisieren.

19. Vorrichtung nach Anspruch 18, bei der die Vorrichtung ein Antriebssteuermittel aufweist, um ein Kurvenprofil beim Rippenfördersystem (25, 125, 225) und/oder der Rippenfertigungseinheit (300) anzuwenden.

20. Vorrichtung nach Anspruch 13, bei der das Rippenfördermittel (15, 115) eine kontinuierliche Reihe von Schaltbereichen (R, T, P) aufweist.

21. Vorrichtung nach Anspruch 13, bei der das Rippenfördermittel (15, 115) eine Reihe von getrennten Schaltbereichen aufweist, die zwei oder mehrere Rippen (4, 104) in die Lage versetzen, der Plattform an einer bestimmten Stelle im Fertigungszyklus zugeführt zu werden.

22. Vorrichtung nach einem der vorhergehenden Ansprüche, die außerdem ein Zuordnungsmittel (14, 114) aufweist, das funktionsfähig ist, um mindestens ein Rohr (3, 103) oder eine Rippe (4, 104) längs der Auflagefläche (2, 102) zu bewegen, und vorzugsweise die Wärmetauscherblockmatrix, während sie längs der Auflagefläche (2, 102) montiert wird;
und bei der wahlweise das Zuordnungsmittel (14, 114) ein Matrixzuordnungsschienenmechanismus ist, der ausgebildet ist, um mit einem Rohr (3, 103) in Kontakt zu kommen, das mittels der gemeinsamen Zuführführung (8, 108) auf der Auflagefläche (2, 102) abgelegt wird, um das Rohr (3, 103) an der gemeinsamen Zuführführung (8, 108) vorbei zu bewegen.

23. Vorrichtung nach einem der vorhergehenden Ansprüche, die außerdem ein Steuermittel aufweist, um die Anzahl der Rohre (3, 103) und Rippen (4, 104) zu zählen, die auf der Auflagefläche (2, 102) angeordnet sind.

24. Vorrichtung nach einem der vorhergehenden Ansprüche, die außerdem eine Übertragungseinheit (40, 140) aufweist, um die Wärmetauscherblockmatrix längs der Auflagefläche (2, 102) zu übertragen, wenn sie montiert wird;
und bei der wahlweise die Übertragungseinheit (40, 140) funktionsfähig ist, um auf der Auflagefläche (2, 102) angeordnete Rohre (3, 103) und Rippen (4, 104) während einer ersten Montagephase zu tragen.

25. Vorrichtung nach einem der vorhergehenden Ansprüche, die außerdem Wärmetauschermatrixhaltestangen (26, 126) aufweist, die vor der gemeinsamen Zuführführung (8, 108) und über der Auflagefläche (2, 102) angeordnet sind.

26. Vorrichtung nach einem der vorhergehenden Ansprüche, die außerdem ein Rippenfördersystem (25, 125, 225) für das Zuführen von mindestens einer Rippe (4, 104) zur Vorrichtung für das Montieren einer Wärmetauscherblockmatrix aufweist; wobei das System ein Band (250) mit Mitnehmern (F) in regelmäßigen Intervallen aufweist, wobei ein jeder Mitnehmer (F) konfiguriert ist, um in eine Welle der Rippe (4, 104) zu passen, und um dadurch eine Haltewirkung zu bewirken;
und bei der das System wahlweise ein Antriebssteuermittel aufweist, um die Geschwindigkeit des Rippenfördersystems mit Bezugnahme auf die Zuführ- und Schnittgeschwindigkeit einer dazugehörenden Rippenfertigungseinheit zu synchronisieren.

27. Vorrichtung nach Anspruch 26, die außerdem ein Antriebssteuermittel aufweist, um ein Kurvenprofil beim Rippenfördersystem (25, 125, 225) zur Anwendung zu bringen, um so die Geschwindigkeit des Rippenfördersystems (25, 125, 225) während eines Rippenübertragungszyklus mit Bezugnahme auf die Zuführ- und Schnittgeschwindigkeit der dazugehörenden Rippenfertigungseinheit (300) zu regulieren.

28. Verfahren zum Montieren einer Wärmetauscherblockmatrix, wobei das Verfahren die folgenden Schritte aufweist: (i) Zuführen eines Rohres (3, 103) vertikal zu einer Zuordnungsfläche (27, 127) mittels einer Zuführführung (8, 108); (ii) Zuführen einer Rippe (4, 104) vertikal zur Zuordnungsfläche (27, 127) mittels einer Zuführführung (8, 108), um die Rippe (4, 104) auf der Zuordnungsfläche (27, 127) stromabwärts vom Rohr (3, 103) aufeinanderfolgend anzuordnen; (iii) Übertragen des Rohr(3, 103)- und Rippen(4, 104)-Paares von der Zuordnungsfläche (27, 127) zu einer Auflagefläche (2, 102); (iv) Bewegen des Rohr(3, 103)- und Rippen(4, 104)-Paares längs der Auflagefläche (2, 102); und (v) Wiederholen der Schritte (i) bis (iv), um eine vorgegebene Anzahl von Rohr(3, 103)- und Rippen(4, 104)-Paaren auf der Auflagefläche (2, 102) zu montieren, **dadurch gekennzeichnet, dass** das Rohr (3, 103) und die Rippe (4, 104) mittels einer gemeinsamen Zuführführung (8, 108) zugeführt werden.

29. Verfahren nach Anspruch 28, das außerdem die folgenden Schritte aufweist: (vi) nachdem eine vorgegebene Anzahl von Rohr(3, 103)- und Rippen(4, 104)-Paaren auf der Auflagefläche (2, 102) montiert wurde, Zuführen einer Rippe (4, 104) vertikal zur Zuordnungsfläche (27, 127) mittels der gemeinsamen Zuführführung (8, 108); (vii) Übertragen der Rippe (4, 104) von der Zuordnungsfläche (27, 127) zur Auflagefläche (2, 102); und (viii) Bewegen der Rippe (4, 104) längs der Auflagefläche (2, 102), sodass sie mit dem Rohr (3, 103) in Kontakt kommt, das zuletzt auf der Auflagefläche (2, 102) angeordnet wurde.

## Revendications

1. Appareil permettant d'assembler une matrice pour noyau d'échangeur de chaleur, l'appareil comprenant: (i) un moyen d'alimentation en tubes (6, 106) permettant d'alimenter en tubes d'échangeur de chaleur (3, 103) une surface de support (2, 102); et (ii) un moyen d'alimentation en ailettes (7) permettant d'alimenter en ailettes d'échangeur de chaleur (4, 104) la surface de support (2, 102); dans lequel le moyen d'alimentation en tubes (6, 106) et le moyen d'alimentation en ailettes (7, 107) sont situés au-dessus de la surface de support et, lors de l'utilisation, l'appareil peut fonctionner de manière à alimenter séquentiellement et verticalement la surface de support (2, 102) en tubes (3, 103) et en ailettes (4, 104) par le biais d'un guide d'alimentation (8, 108), **caractérisé par le fait que** les tubes (3, 103) et les ailettes (4, 104) sont alimentés par un guide d'alimentation commun (8, 108).

2. Appareil selon la revendication 1, dans lequel l'appareil comprend un moyen de stockage de tubes (5, 105) dans lequel une pluralité de tubes d'échangeur de chaleur (3, 103) est stockée.

3. Appareil selon la revendication 1 ou 2, dans lequel le moyen d'alimentation en tubes (6, 106) peut fonctionner de manière à alimenter séquentiellement le guide d'alimentation commun (8, 108) en tubes (3, 103).

4. Appareil selon les revendications 1 à 3, dans lequel le moyen d'alimentation en tubes (6, 106) peut fonctionner de manière à alimenter séquentiellement la surface de support (2, 102) en tubes (3, 103) par le biais du guide d'alimentation commun (8, 108).

5. Appareil selon l'une quelconque des revendications précédentes, dans lequel le moyen d'alimentation en tubes (6,106) peut fonctionner de manière à alimenter un tube (3, 103) dudit moyen de stockage de tubes (5, 105) vers le guide d'alimentation commun (8, 108) en un processus continu.

6. Appareil selon l'une quelconque des revendications précédentes, dans lequel le moyen d'alimentation en tubes (6, 106) comprend un moyen d'acheminement (9, 109) permettant de transporter les tubes (3, 103) vers et à travers le guide d'alimentation commun (8, 108);
et, facultativement, dans lequel le moyen d'acheminement de tubes (9, 109) comprend une courroie crantée (9', 109') pourvue de barrettes (10, 110) à intervalles réguliers pour maintenir les tubes (3, 103) dans l'orientation souhaitée pour qu'ils passent à travers le guide d'alimentation commun (8, 108) et pour qu'ils se présentent sur la surface de support (2, 102) avec l'intervalle requis.

7. Appareil selon la revendication 6, dans lequel le moyen d'acheminement de tubes (9, 109) comprend une courroie (9', 109') avec deux rouleaux de courroie (11, 12, 111, 112) espacés latéralement, dont au moins un (12, 112) est un rouleau mené.

8. Appareil selon les revendications 6 et 7, dans lequel le moyen d'acheminement de tubes (9, 109) est agencé pour livrer les tubes (3, 103) en ligne avec la direction d'assemblage de l'échangeur de chaleur.

9. Appareil selon les revendications 6 à 8, dans lequel le moyen d'acheminement (9, 109) comprend, en outre, un rouleau de guidage (13, 113) fonctionnant en combinaison avec les rouleaux de courroie (11, 12, 111, 112) pour guider la courroie d'acheminement (9', 109') à travers le guide d'alimentation commun (8, 108);
et, facultativement, dans lequel le rouleau de guidage (13, 113) est situé en avant de l'axe de rotation (A) du rouleau de courroie (12, 112) proche du guide d'alimentation commun (8, 108).

10. Appareil selon l'une quelconque des revendications précédentes, dans lequel le moyen de stockage de tubes (5, 105) est agencé pour qu'un tube (3, 103) dans le moyen de stockage de tubes (5, 105) repose sur un bord supérieur de la courroie d'acheminement de tubes (9', 109') de manière à ce que, à mesure que la courroie tourne, les barrettes (10, 110) passent devant les tubes (3, 103) dans le moyen de stockage de tubes (5, 105) et, de cette manière, reçoivent les tubes (3, 103).

11. Appareil selon l'une quelconque des revendications précédentes, dans lequel le moyen d'alimentation en tubes (6, 106) est positionné, par rapport à la direction de fabrication de la matrice pour noyau d'échangeur de chaleur, en ligne et en amont du guide d'alimentation commun (8, 108);
et, facultativement, dans lequel les tubes (3, 103) sont transférés du moyen de stockage de tubes (5, 105) vers le guide d'alimentation commun (8, 108) le long de la chaîne de fabrication.

12. Appareil selon l'une quelconque des revendications précédentes, dans lequel le moyen d'alimentation en ailettes (7, 107) permettant d'alimenter en ailettes d'échangeur de chaleur (4, 104) la surface de support (2, 102) est positionné en ligne et en aval du guide d'alimentation commun (8, 108);
et, facultativement, dans lequel les ailettes (4, 104) sont présentées au guide d'alimentation commun (8, 108) par un moyen permettant de transférer les ailettes (4, 104) d'un moyen de fabrication ou de stockage d'ailettes dans la direction opposée à la direction de transfert des tubes vers le guide d'alimentation commun (8, 108).

13. Appareil selon la revendication 12, dans lequel le moyen d'alimentation en ailettes (7, 107) comprend un moyen d'acheminement d'ailettes (15, 115) adapté pour fixer les ailettes (4, 104) dans l'orientation requise pour leur présentation au guide d'alimentation commun (8, 108) et avec l'intervalle requis;
et, facultativement, dans lequel le moyen d'acheminement d'ailettes (15, 115) comprend une courroie crantée (16, 116) et deux rouleaux de courroie (17, 18, 117, 118) espacés latéralement, dont au moins un (18, 118) est un rouleau mené, qui permettent au moyen d'acheminement d'ailettes (15, 115) de livrer les ailettes (4, 104) en ligne dans la direction opposée à la direction d'assemblage de la matrice pour noyau d'échangeur de chaleur.

14. Appareil selon les revendications 12 ou 13, dans lequel le moyen d'acheminement d'ailettes (15, 115) fonctionne en coopération avec un mécanisme de livraison à plate-forme (19, 119) pour livrer les ailettes (4, 104) requises du moyen d'acheminement cranté (15, 115) au guide d'alimentation commun (8, 108);
et, facultativement, dans lequel le mécanisme de livraison à plate-forme (19, 119) fonctionne en coopération avec un mécanisme à traverse pousseuse (20, 120) permettant de transférer des ailettes (4, 104) depuis une surface de plate-forme (21, 121) et dans le guide d'alimentation commun (8, 108).

15. Appareil selon la revendication 13, dans lequel le moyen d'acheminement d'ailettes (15, 115) transfère les ailettes (4, 104) vers le guide d'alimentation commun (8, 108) avec les ailettes (4, 104) en contact avec une surface de support d'ailettes (22, 122).

16. Appareil selon la revendication 14, dans lequel le mécanisme de livraison à plate-forme (19, 119) est positionné de manière à ce que sa surface supérieure (21, 121) soit coplanaire avec la surface supérieure d'une surface de support d'ailettes (22, 122);
et, facultativement, dans lequel la surface supérieure (21, 121) du mécanisme de livraison à plate-forme (19, 119) peut être déplacée de sa position coplanaire avec la surface de support d'ailettes (22, 122) vers un niveau plus bas que la surface de support d'ailettes (22, 122) proche du guide d'alimentation commun (8, 108).

17. Appareil selon la revendication 13, dans lequel le moyen d'acheminement d'ailettes (15, 115) est alimenté en ailettes (4, 104) depuis une unité de fabrication d'ailettes par le biais d'un système d'acheminement d'ailettes (25, 125, 225) qui présente les ailettes (4, 104) au moyen d'acheminement d'ailettes (15, 115) perpendiculairement à la direction de déplacement du moyen d'acheminement d'ailettes cranté (15, 115);
et, facultativement, dans lequel le système d'acheminement d'ailettes (25, 125, 225) comprend une pluralité de barrettes pour fournir des interfaces s'ajustant dans les circonvolutions des ailettes.

18. Appareil selon la revendication 17, dans lequel la vitesse du système d'acheminement d'ailettes (25, 125, 225) est synchronisée par rapport au débit d'alimentation et à la vitesse de coupe de l'unité de fabrication d'ailettes;
et, facultativement, dans lequel l'appareil comprend un moyen de commande d'entraînement pour synchroniser la vitesse du système d'acheminement d'ailettes (25, 125, 225) et de l'unité de fabrication d'ailettes.

19. Appareil selon la revendication 18, dans lequel l'appareil comprend un moyen de commande d'entraînement pour appliquer un profil de came au système d'acheminement d'ailettes (25, 125, 225) et/ou à l'unité de fabrication d'ailettes (300).

20. Appareil selon la revendication 13, dans lequel le moyen d'acheminement d'ailettes (15, 115) comprend une série continue de zones crantées (R, T, P).

21. Appareil selon la revendication 13, dans lequel le moyen d'acheminement d'ailettes (15, 115) comprend une série de zones séparées de crantage permettant à deux ailettes (4, 104) ou plus d'être alimentées vers la plate-forme à un moment donné du cycle de fabrication.

22. Appareil selon l'une quelconque des revendications précédentes, comprenant, en outre, un moyen d'attribution (14, 114) pouvant fonctionner de manière à déplacer au moins un tube (3, 103) ou une ailette (4, 104) le long de la surface de support (2, 102) et, de préférence, la matrice pour noyau d'échangeur de chaleur au fur et à mesure de son assemblage le long de la surface de support (2, 102);
et, facultativement, dans lequel le moyen d'attribution (14, 114) est un mécanisme d'attribution de matrice à traverse adapté pour entrer en contact avec un tube (3, 103) déposé sur la surface de support (2, 102) par le biais du guide d'alimentation commun (8, 108) afin de faire passer le tube (3, 103) de l'autre côté du guide d'alimentation commun (8, 108).

23. Appareil selon l'une quelconque des revendications précédentes, comprenant, en outre, un moyen de contrôle pour compter le nombre de tubes (3, 103) et d'ailettes (4, 104) situés sur la surface de support (2, 102).

24. Appareil selon l'une quelconque des revendications précédentes, comprenant, en outre, une unité de transfert (40, 140) pour transférer la matrice pour noyau d'échangeur de chaleur le long de la surface de support (2, 102) lorsqu'elle est assemblée ;
et, facultativement, dans lequel l'unité de transfert (40, 140) peut fonctionner de manière à supporter des tubes (3, 103) et des ailettes (4, 104) situés sur la surface de support (2, 102) pendant une première phase d'assemblage.

25. Appareil selon l'une quelconque des revendications précédentes, comprenant, en outre, des barres de retenue (26, 126) de la matrice d'échangeur de chaleur situées en avant du guide d'alimentation commun (8, 108) et au-dessus de la surface de support (2, 102).

26. Appareil selon l'une quelconque des revendications précédentes, comprenant, en outre, un système d'acheminement d'ailettes (25, 125, 225) permettant d'alimenter au moins une ailette (4, 104) vers l'appareil pour l'assemblage d'une matrice pour noyau d'échangeur de chaleur; le système comprenant une courroie (250) pourvue de barrettes (F) à intervalles réguliers, chaque barrette (F) étant configurée pour s'ajuster dans une circonvolution de l'ailette (4, 104) et procurer, de cette manière, un effet de retenue;
et, facultativement, dans lequel le système comprend un moyen de commande d'entraînement pour synchroniser la vitesse du système d'acheminement d'ailettes par rapport au débit d'alimentation et à la vitesse de coupe d'une unité de fabrication d'ailettes associée.

27. Appareil selon la revendication 26, comprenant, en outre, un moyen de commande d'entraînement pour appliquer un profil de came au système d'acheminement d'ailettes (25, 125, 225) de manière à réguler la vitesse du système d'acheminement d'ailettes (25, 125, 225) pendant un cycle de transfert d'ailettes par rapport au débit d'alimentation et à la vitesse de coupe de l'unité de fabrication d'ailettes (300) associée.

28. Procédé d'assemblage d'une matrice pour noyau d'échangeur de chaleur, le procédé comprenant les étapes consistant à: (i) alimenter un tube (3, 103) verticalement par rapport à une surface d'attribution (27, 127) par le biais d'un guide d'alimentation (8, 108); (ii) alimenter une ailette (4, 104) verticalement par rapport à la surface d'attribution (27, 127) par le biais d'un guide d'alimentation (8, 108) pour placer séquentiellement l'ailette (4, 104) sur la surface d'attribution (27, 127) en aval du tube (3, 103); (iii) transférer le tube (3, 103) et l'ailette (4, 104) formant une paire de la surface d'attribution (27, 127) sur une surface de support (2, 102); (iv) déplacer la paire de tube (3, 103) et d'ailette (4, 104) le long de la surface de support (2, 102); et (v) répéter les étapes (i) à (iv) pour assembler un nombre prédéterminé de paires de tube (3, 103) et d'ailette (4, 104) sur la surface de support (2, 102), **caractérisé par le fait que** le tube (3, 103) et l'ailette (4, 104) sont alimentés par le biais d'un guide d'alimentation commun (8, 108).

29. Procédé selon la revendication 28, comprenant, en outre, les étapes consistant à: (vi) après avoir assemblé un nombre prédéterminé de paires de tube (3, 103) et d'ailette (4, 104) sur la surface de support (2, 102), alimenter une ailette (4, 104) verticalement par rapport à la surface d'attribution (27, 127) par le biais du guide d'alimentation commun (8, 108); (vii) transférer l'ailette (4, 104) de la surface d'attribution (27, 127) sur la surface de support (2, 102); et (viii) déplacer l'ailette (4, 104) le long de la surface de support (2, 102) pour qu'elle entre en contact avec le tube (3, 103) qui a été placé en dernier sur la surface de support (2, 102).
